# EUROPEAN PATENT APPLICATION

(11) **EP 4 425 125 A1**
(43) Date of publication of application: **04.09.2024**
(21) Application number: 22950377.6
(22) Date of filing: 18.11.2022
(51) Int. Cl.: G01J 1/42, G01J 1/02, G01J 1/04, B60R 1/26, B60K 35/00, B60R 1/12

(54) **DISPLAY DEVICE FOR VEHICLE**

(30) Priority: 07.07.2022 KR 20220084011
(71) Applicant: LG Electronics Inc., Yeongdeungpo-gu Seoul 07336 (KR)
(72) Inventor: KIM, Sangwon, Seoul 06772 (KR); KIM, Kyunglack, Seoul 06772 (KR); JO, Juung, Seoul 06772 (KR); KIM, Dongkuk, Seoul 06772 (KR); HONG, Selim, Seoul 06772 (KR); KIM, Doyoung, Seoul 06772 (KR)
(74) Representative: Vossius & Partner Patentanwälte Rechtsanwälte mbB
(86) International application number: PCT/KR2022/018335
(87) International publication number: WO 2024/010152

(57) **Abstract**

The present disclosure relates to a vehicle display device. The vehicle display device according to an embodiment of the present disclosure includes a display panel; a backlight unit comprising a plurality of blocks comprised of a light source; a viewing angle adjustment panel comprising a plurality of liquid crystal layers comprised of liquid crystal; and a controller, wherein the controller changes an arrangement of the liquid crystal disposed in a restricted area of the viewing angle adjustment panel corresponding to a certain area of the display panel, based on a setting of a certain mode for controlling a viewing angle, and adjusts an intensity of light emitted from a block corresponding to the restricted area among the plurality of blocks, based on a difference between a preset reference luminance level and a luminance level of the certain area according to the setting of the certain mode. In addition, various embodiments are possible.

## Description

### [Technical Field]

This disclosure relates to a vehicle display device.

### [Background Art]

A vehicle refers to a means of moving people or luggage by using kinetic energy. A representative example of a vehicle is a car.

Systems for the convenience and safety of vehicle user have been actively developed. For example, for the convenience of user, vehicle may provide functions of adaptive cruise control (ACC), smart parking assist system (SPAS), night vision (NV), head-up display (HUD), around view monitor (AVM), adaptive headlight system (AHS), and the like. For example, for the safety of user, vehicle may provide functions of lane departure warning system (LDWS), lane keeping assist system (LKAS), autonomous emergency braking (AEB), and the like.

Meanwhile, for the convenience and safety of vehicle user, vehicle is increasingly equipped with various sensors and electronic devices. In particular, vehicle is equipped with one or more display devices that may output information related to the driving of vehicle or content for user's convenience. A display device is a device that has the function of displaying images that user may view. For example, the display device may include a liquid crystal display (LCD) using liquid crystal or an OLED display using organic light emitting diode (OLED).

A driver or passenger in vehicle may watch various contents displayed through a display device. For example, a vehicle may output an instrument panel screen indicating a driving speed, mileage, and the like through a driver side display, and output an OTT screen showing content through a passenger side display.

However, various problems may occur due to content output through the display device installed in the vehicle. For example, if a driver in driver's seat looks at a passenger side display due to content displayed through the passenger side display, a traffic accident mat happen because the driver momentarily fails to look ahead. In addition, if content displayed through a display device disposed inside a vehicle is exposed to others outside the vehicle, the privacy of vehicle user may be violated.

In addition, similar to those disclosed in the prior document (US 2015/0193625 A1), a conventional configuration that blocks or distorts light emitted in a specific direction is used to prevent a driver or other person located outside the vehicle from viewing vehicle interior image. However, a configuration that blocks or distorts light emitted in a specific direction may also affect the intensity of light emitted in other directions. Hence, a problem that the quality of the image output through the display is degraded or the brightness is uneven may occur.

### [Disclosure]

### [Technical Problem]

An object of the present disclosure aims to solve the foregoing problems and other problems.

Another object is to provide a vehicle display device that may adjust the viewing angle of a display panel.

Another object is to provide a vehicle display device that may variously adjust a display area where the viewing angle is adjusted.

Another object is to provide a vehicle display device that may compensate for the luminance of an image output through an area where the viewing angle is adjusted, when the viewing angle of the display panel is adjusted.

Another object is to provide a vehicle display device that may prevent the privacy of a specific person in a vehicle from being exposed to others in the vehicle.

Another object is to provide a vehicle display device that may prevent content output through a display panel from being exposed to the outside of vehicle.

### [Technical Solution]

In order to achieve the above objects, a vehicle display device according to an embodiment of the present disclosure includes a viewing angle adjustment panel including a plurality of liquid crystal layers made of liquid crystal, and adjusts the viewing angle by adjusting the arrangement of the liquid crystal of the viewing angle adjustment panel.

In addition, according to an embodiment of the present disclosure, the vehicle display device includes: a display panel; a backlight unit including a plurality of blocks composed of a light source; and a controller for adjusting the viewing angle of the display panel by controlling the arrangement of the liquid crystal.

In addition, according to an embodiment of the present disclosure, the controller changes an arrangement of the liquid crystal disposed in a restricted area of the viewing angle adjustment panel corresponding to a certain area of the display panel, based on a setting of a certain mode for controlling a viewing angle, and adjusts an intensity of light emitted from a block corresponding to the restricted area among the plurality of blocks, based on a difference between a preset reference luminance level and a luminance level of the certain area according to the setting of the certain mode.

In addition, according to an embodiment of the present disclosure, the intensity of the light emitted from the block corresponding to the restricted area corresponds to a voltage applied to the block corresponding to the restricted area, and as the difference between the preset reference luminance level and the luminance level of the certain area increases, the voltage applied to the block corresponding to the restricted area increases.

In addition, according to an embodiment of the present disclosure, the reference luminance level is a luminance level of the certain area according to a cancel of the certain mode.

In addition, according to an embodiment of the present disclosure, the reference luminance level is a luminance level of one area adjacent to the certain area among remaining area of the display panel excluding the certain area.

In addition, according to an embodiment of the present disclosure, the controller adjusts an intensity of light emitted from the plurality of blocks in response to a change in ambient illuminance of vehicle, and the reference luminance level increases in proportion to an increase in the ambient illuminance.

In addition, according to an embodiment of the present disclosure, in a state where the certain mode is set, the controller minimize the intensity of the light emitted from the block corresponding to the restricted area, based on a user not being located in a passenger seat.

In addition, according to an embodiment of the present disclosure, in a state where the certain mode is set, the controller determines the difference between the reference luminance level and the luminance level of the certain area according to a position of a user riding in a passenger seat.

In addition, according to an embodiment of the present disclosure, the viewing angle adjustment panel includes a plurality of substrates respectively disposed in both sides of the liquid crystal layer, the arrangement of the liquid crystal is changed in a certain direction that restricts emission of light toward driver's seat, based on a voltage being applied to the plurality of substrates, and as a distance between the restricted area of the viewing angle adjustment panel and the driver's seat decreases, a voltage applied to the restricted area of the viewing angle adjustment panel increases.

In addition, according to an embodiment of the present disclosure, the viewing angle adjustment panel is composed of a plurality of subunits disposed side by side so that the arrangement of the liquid crystal is independently controlled, and the plurality of subunits respectively correspond to a plurality of areas forming the display panel.

In addition, according to an embodiment of the present disclosure, based on a fact that a speed of vehicle is a preset speed limit or higher, the controller determines one area of the display panel adjacent to a passenger seat as the certain area, and an area of the certain area increases as the speed of vehicle increases.

In addition, according to an embodiment of the present disclosure, based on an output of certain content related to driving of vehicle, the controller determines the certain area from among remaining area of the display panel excluding an area from which the certain content is output.

In addition, according to an embodiment of the present disclosure, based on an output of certain content corresponding to a passenger seat, the controller determines an area of the display panel from which the certain content is output as the certain area.

In addition, according to an embodiment of the present disclosure, the controller sets the certain mode, based on whether a state of transmission of the vehicle corresponds to drive, reverse, or neutral, and cancels the certain mode, based on the state of transmission of the vehicle corresponding to parking.

In addition, according to an embodiment of the present disclosure, the controller sets the certain mode, based on the vehicle being set to manual mode, and cancels the certain mode, based on the vehicle being set to autonomous driving mode.

In addition, according to an embodiment of the present disclosure, the viewing angle adjustment panel includes: a plurality of first substrates respectively disposed in both sides of a first liquid crystal layer; and a plurality of second substrates respectively disposed in both sides of a second liquid crystal layer, wherein a liquid crystal included in the first liquid crystal layer changes its arrangement in a first direction that restricts emission of light toward driver's seat, based on a voltage being applied to the plurality of first substrates, and wherein a liquid crystal included in the second liquid crystal layer changes its arrangement in a second direction that restricts emission of light toward passenger seat, based on a voltage being applied to the plurality of second substrates.

### [Advantageous Effects]

The effects of the vehicle display device according to the present disclosure are explained as follows.

According to at least one embodiment of the present disclosure, the viewing angle for the display panel may be adjusted.

In addition, according to at least one embodiment of the present disclosure, the display area where the viewing angle is adjusted may be adjusted in various ways.

In addition, according to at least one embodiment of the present disclosure, when the viewing angle of the display panel is adjusted, the luminance of the image output through the area where the viewing angle is adjusted may be compensated.

In addition, according to at least one embodiment of the present disclosure, the content output through the display panel may be prevented from being exposed to the outside of the vehicle.

Further scope of applicability of the present disclosure will become apparent from the following detailed description. However, it should be understood that the detailed description and specific embodiments such as preferred embodiments of the present disclosure are given by way of illustration only, since various changes and modifications within the spirit and scope of the present disclosure may be clearly understood by those skilled in the art.

### [Description of Drawings]

FIG. 1 is a diagram showing an outer shape of a vehicle, according to an embodiment of the present disclosure;
FIG. 2 is a diagram of a vehicle viewed from various external angles, according to an embodiment of the present disclosure;
FIGS. 3 and 4 are diagrams showing an interior of a vehicle, according to an embodiment of the present disclosure;
FIGS. 5 and 6 are diagrams for explaining an object, according to an embodiment of the present disclosure;
FIG. 7 is a block diagram for explaining a vehicle, according to an embodiment of the present disclosure;
FIGS. 8 to 19 are diagrams for explaining a vehicle display device, according to an embodiment of the present disclosure;
FIG. 20 is a flowchart of a method of operating a vehicle display device, according to an embodiment of the present disclosure;
FIGS. 21 to 37 are diagrams for explaining an operation related to compensation for luminance of a vehicle display device, according to an embodiment of the present disclosure;
FIGS. 38 to 49 are diagrams for explaining a setting of restricted area, according to an embodiment of the present disclosure;
FIGS. 50 to 52 are diagrams for explaining a vehicle display device, according to an embodiment of the present disclosure; and
FIGS. 53 to 70 are diagrams for explaining an operation of vehicle display device, according to an embodiment of the present disclosure.

### [Mode for Invention]

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function. Accordingly, the terms "module" and "unit" may be used interchangeably.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

In addition, in this specification, terms such as first and second may be used to describe various elements, but these elements are not limited by these terms. These terms are used only to distinguish one element from another.

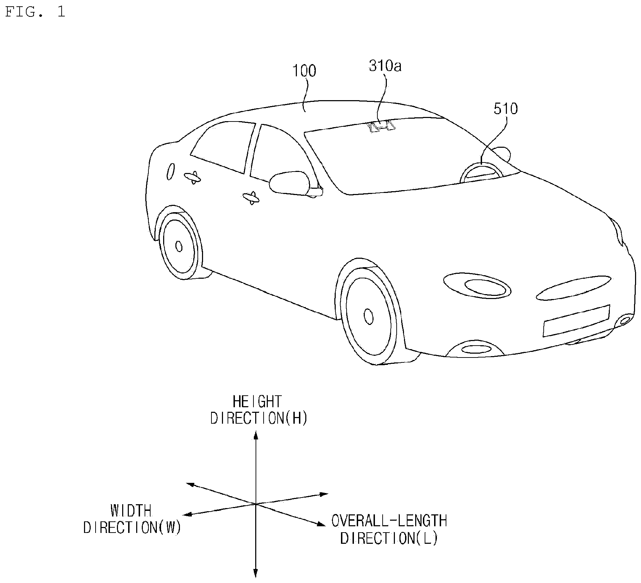

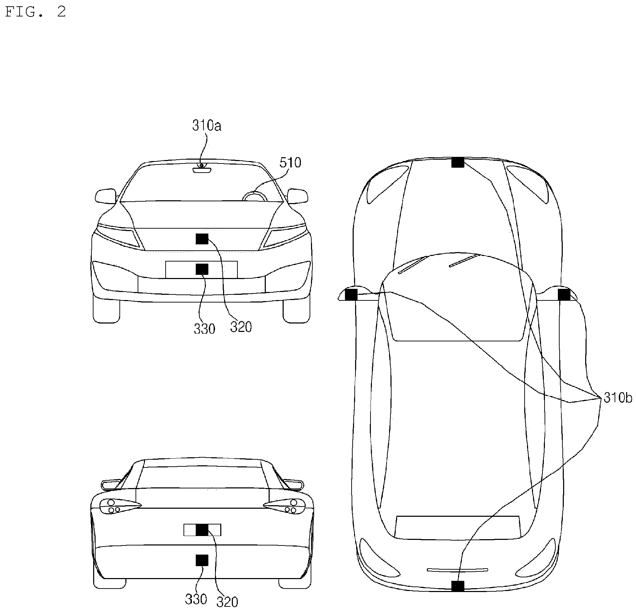

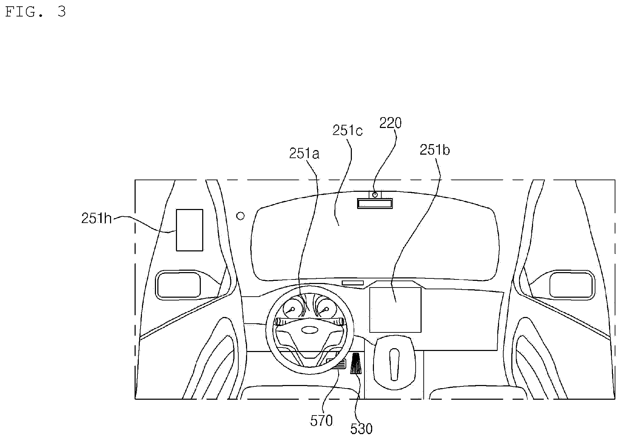

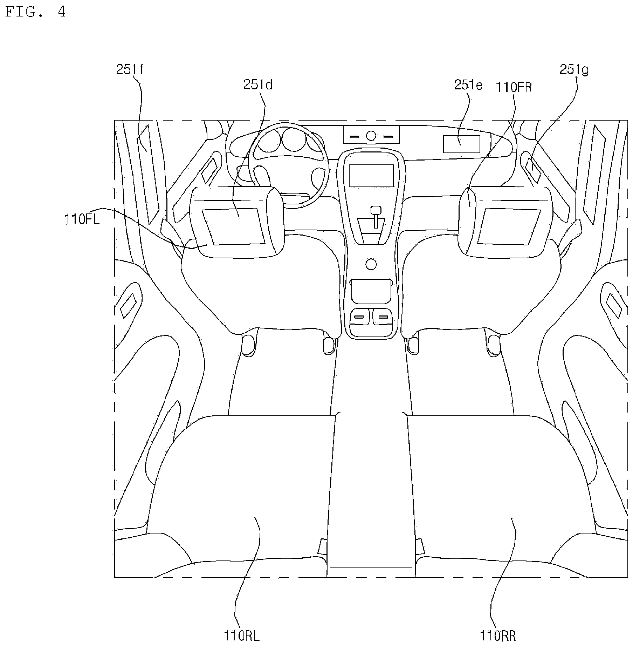

Referring to FIGS. 1 to 7, a vehicle 100 may include a wheel rotated by a power source and a steering input device 510 for adjusting the direction of travel of the vehicle 100.

The vehicle 100 may be an autonomous vehicle.

The vehicle 100 may be switched to autonomous driving mode or manual mode, based on user input. For example, the vehicle 100 may be switched from manual mode to autonomous driving mode, or from autonomous driving mode to manual mode, based on user input received through a user interface device 200.

The vehicle 100 may be switched to autonomous driving mode or manual mode, based on driving situation information. The driving situation information may include at least one of information on object outside a vehicle, navigation information, and vehicle state information. For example, the vehicle 100 may be switched from manual mode to autonomous driving mode, or from autonomous driving mode to manual mode, based on driving situation information generated by an object detection device 300. For example, the vehicle 100 may be switched from manual mode to autonomous driving mode, or from autonomous driving mode to manual mode, based on driving situation information received through a communication device 400.

The vehicle 100 may switch from manual mode to autonomous driving mode or from autonomous driving mode to manual mode, based on information, data, and signals provided from an external device.

When the vehicle 100 is operated in autonomous driving mode, the autonomous vehicle 100 may be operated based on an operation system 700. For example, the autonomous vehicle 100 may be operated based on information, data, or signals generated in a driving system 710, a parking exit system 740, and a parking system 750.

When the vehicle 100 is operated in manual mode, the autonomous vehicle 100 may receive user input for driving through a driving control device 500. Based on the user input received through the driving control device 500, the vehicle 100 may be operated.

The overall length refers to a length from the front to the rear of the vehicle 100, the width refers to a width of the vehicle 100, and the height refers to a length from a bottom of wheel to a roof. In the following description, the overall length direction L may refer to a direction that serves as a standard for measuring the overall length of the vehicle 100, the width direction W may refer to a direction that serves as a standard for measuring the width of the vehicle 100, and the height direction H may refer to a direction that serves as a standard for measuring the height of the vehicle 100.

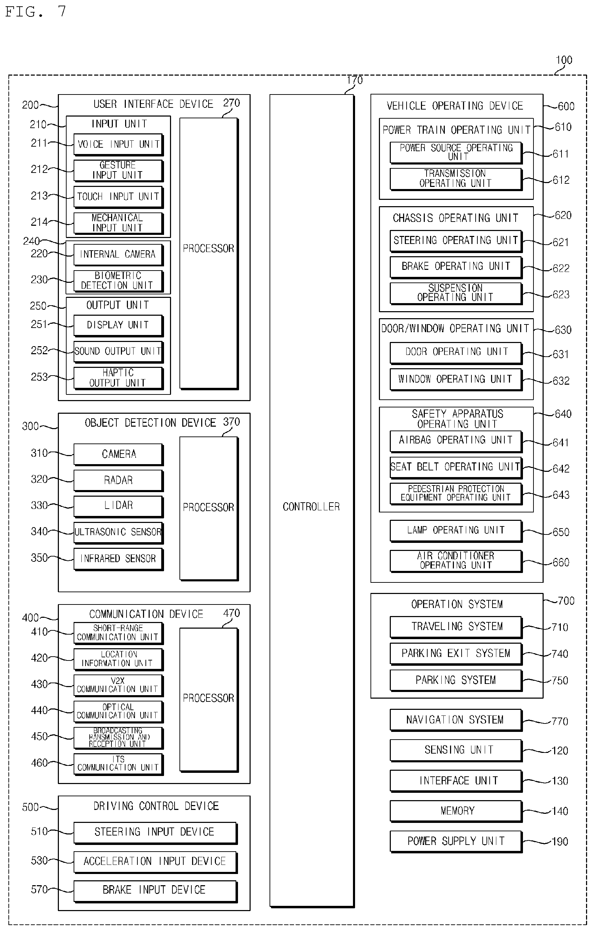

As illustrated in FIG. 7, the vehicle 100 may include a user interface device 200, an object detection device 300, a communication device 400, a driving control device 500, a vehicle operating device 600, an operation system 700, a navigation system 770, a sensing unit 120, an interface unit 130, a memory 140, a controller 170, and/or a power supply unit 190. In some embodiments, the vehicle 100 may further include other components in addition to the components described in this specification, or may not include some of the described components.

The user interface device 200 is a device for communication between the vehicle 100 and a user. The user interface device 200 may receive user input and provide information generated by the vehicle 100 to a user. The vehicle 100 may implement User Interfaces (UI) or User Experience (UX) through the user interface device 200.

The user interface device 200 may include an input unit 210, an internal camera 220, a biometric detection unit 230, an output unit 250, and/or a processor 270.

In some embodiments, the user interface device 200 may further include other components in addition to the described components, or may not include some of the described components.

The input unit 210 is used to receive information from a user, and data collected by the input unit 210 may be analyzed by the processor 270 and processed as a user's control command. The input unit 210 may be disposed inside the vehicle. For example, the input unit 210 may be disposed on one area of steering wheel, one area of instrument panel, one area of seat, one area of each pillar, one area of door, one area of center console, one area of head lining, one area of sun visor, one area of windshield, or one area of window, etc.

The input unit 210 may include a voice input unit 211, a gesture input unit 212, a touch input unit 213, and/or a mechanical input unit 214.

The voice input unit 211 may convert a user's voice input into an electrical signal. The converted electrical signal may be provided to the processor 270 or the controller 170. The voice input unit 211 may include one or more microphones.

The gesture input unit 212 may convert a user's gesture input into an electrical signal. The converted electrical signal may be provided to the processor 270 or the controller 170. The gesture input unit 212 may include at least one of an infrared sensor and an image sensor to detect a user's gesture input. In some embodiments, the gesture input unit 212 may detect a user's 3D gesture input. To this end, the gesture input unit 212 may include an optical output unit that outputs a plurality of infrared lights or a plurality of image sensors. The gesture input unit 212 may detect the user's 3D gesture input through a time of flight (TOF) method, a structured light method, or a disparity method.

The touch input unit 213 may convert the user's touch input into an electrical signal. The converted electrical signal may be provided to the processor 270 or the controller 170. The touch input unit 213 may include a touch sensor to detect a user's touch input. In some embodiments, the touch input unit 213 may be formed as one body with a display unit 251 to implement a touch screen. Such a touch screen may provide both an input interface and an output interface between the vehicle 100 and a user.

The mechanical input unit 214 may include at least one of a button, a dome switch, a jog wheel, and a jog switch. The electrical signal generated by the mechanical input unit 214 may be provided to the processor 270 or the controller 170. The mechanical input unit 214 may be disposed in the steering wheel, the center fascia, the center console, the cock pick module, the door, etc.

The internal camera 220 may acquire a vehicle interior image. The processor 270 may detect a user's state, based on the vehicle interior image. The processor 270 may acquire user's gaze information from the vehicle interior image. The processor 270 may detect a user's gesture from the vehicle interior image.

The biometric detection unit 230 may acquire user's biometric information. The biometric detection unit 230 may include a sensor capable of acquiring the user's biometric information. The biometric detection unit 230 may acquire user's fingerprint information, heart rate information, and the like by using the sensor. Biometric information may be used for user authentication.

The output unit 250 is used to generate output related to vision, hearing, or tactile sensation. The output unit 250 may include at least one of a display unit 251, an audio output unit 252, and a haptic output unit 253.

The display unit 251 may display a graphic object corresponding to various information. The display unit 251 may include at least one of a liquid crystal display (LCD), a thin film transistor-liquid crystal display (TFT LCD), an organic light-emitting diode (OLED), a flexible display, a 3D display, and an e-ink display. The display unit 251 may be named a vehicle display device 251.

The display unit 251 may implement a touch screen by forming a mutual layer structure or being formed as one body with the touch input unit 213.

The display unit 251 may be implemented as a Head Up Display (HUD). When the display unit 251 is implemented as a HUD, the display unit 251 may be equipped with a projection module and may output information through an image projected on a windshield or window.

The display unit 251 may include a transparent display. The transparent display may be attached to the windshield or window.

The transparent display may display a certain screen while having a certain transparency. In order to have transparency, the transparent display may include at least one of transparent Thin Film Electroluminescent (TFEL), transparent Organic Light-Emitting Diode (OLED), transparent Liquid Crystal Display (LCD), transmissive transparent display, and transparent Light Emitting Diode (LED) display. The transparency of transparent display may be adjusted.

Meanwhile, the user interface device 200 may include a plurality of display units 251a to 251g. The display unit 251 may be disposed on one area of steering wheel, one area of instrument panel 251a, 251b, 251e, one area of seat 251d, one area of each pillar 251f, one area of door 251g, one area of center console, one area of head lining, and one area of sun visor, or implemented on one area of windshield 251c, and one area of window 251h.

The audio output unit 252 converts an electrical signal provided from the processor 270 or the controller 170 into an audio signal and outputs it. For this purpose, the audio output unit 252 may include one or more speakers.

The haptic output unit 253 generates a tactile output. For example, the haptic output unit 253 may operate to allow user to perceive the output by vibrating the steering wheel, seat belt, seat 110FL, 110FR, 110RL, 110RR, etc.

The processor 270 may control the overall operation of each unit of the user interface device 200.

In some embodiments, the user interface device 200 may include a plurality of processors 270 or may not include the processor 270. When the user interface device 200 does not include the processor 270, the user interface device 200 may be operated under the control of the processor of another device in the vehicle 100 or controller 170.

Meanwhile, the user interface device 200 may be named a vehicle display device. The user interface device 200 may be operated under the control of the controller 170.

The object detection device 300 is a device for detecting objects located outside the vehicle 100. The object detection device 300 may generate object information, based on sensing data. The object information may include information related to the presence or absence of an object, location information of an object, distance information between the vehicle 100 and an object, and relative speed information between the vehicle 100 and an object. The object may be various objects related to the operation of the vehicle 100.

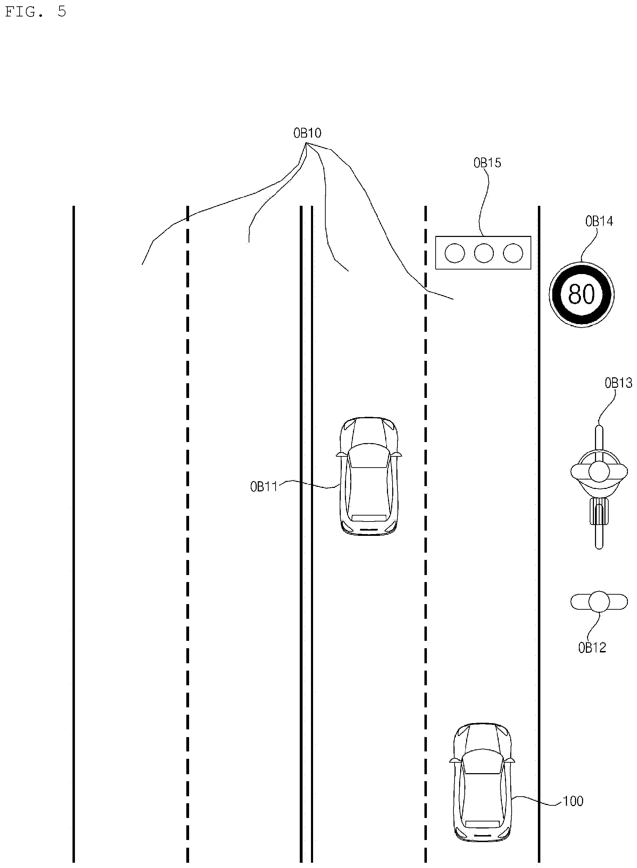

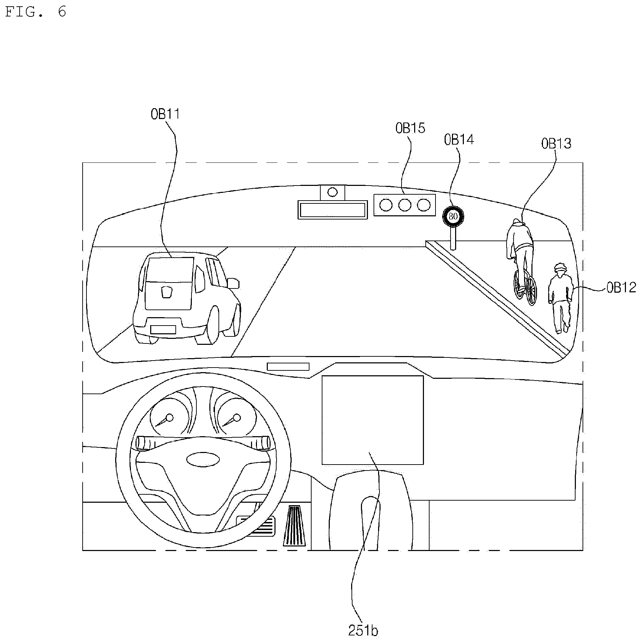

Referring to FIGS. 5 and 6, the object O may include a lane OB10, other vehicle OB11, a pedestrian OB12, a two-wheeled vehicle OB13, a traffic signal OB14, OB15, light, a road, a structure, speed bumps, landforms, animals, etc.

The lane OB10 may be a driving lane, a lane next to a driving lane, or a lane in which an opposing vehicle drives. The lane OB10 may be a concept that includes left and right side lines forming a lane. The lane may be a concept that includes an intersection.

The other vehicle OB11 may be a vehicle driving around the vehicle 100. The other vehicle may be a vehicle located within a certain distance from the vehicle 100. For example, the other vehicle OB11 may be a vehicle that precedes or follows the vehicle 100.

A pedestrian OB12 may be a person located around the vehicle. The pedestrian OB12 may be a person 100 located within a certain distance from the vehicle 100. For example, the pedestrian OB12 may be a person located on a sidewalk or on the roadway.

The two-wheeled vehicle OB13 refers to a vehicle that is located around the vehicle 100 and moves by using two wheels. The two-wheeled vehicle OB13 may be a vehicle that has two wheels located within a certain distance from the vehicle 100. For example, the two-wheeled vehicle OB13 may be a motorcycle or a bike located on a sidewalk or the roadway.

A traffic signal may include a traffic light OB15, a traffic sign plate OB14, and a pattern or text painted on a road surface.

The light may be light generated by a lamp provided in the other vehicle. The light may be light generated by a street light. The light may be a solar light.

The road may include a road surface, a curve, and slopes, such as an upward slope and a downward slope.

The structure may be a body that is located around the road and fixed onto the ground. For example, the structure may include a streetlight, a roadside tree, a building, a traffic light, a bridge, a curb, and a wall.

The landforms may include a mountain, a hill, and the like.

Meanwhile, the object may be classified into a movable object and a stationary object. For example, movable object may be a concept of including moving other vehicle and a moving pedestrian. For example, the stationary object may be a concept of including a traffic signal, a road, a structure, a stopped vehicle, and a stopped pedestrian.

The object detection device 300 may include a camera 310, a radar 320, a lidar 330, an ultrasonic sensor 340, an infrared sensor 350, and/or a processor 370.

In some embodiments, the object detection device 300 may further include other components in addition to the aforementioned components, or may not include some of the aforementioned components.

The camera 310 may be located at an appropriate position outside the vehicle 100in order to acquire images of the outside of the vehicle 100. The camera 310 may be a mono camera, a stereo camera 310a, an Around View Monitoring (AVM) camera 310b, or a 360-degree camera.

The camera 310 may acquire location information of an object, information on a distance to the object, and information on a speed relative to the object, by using various image processing algorithms.

For example, the camera 310 may acquire the information on the distance to the object and information on the speed relative to the object, based on a change in size of the object depending on time, from acquired images.

For example, the camera 310 may acquire the information on the distance to the object and information on the speed relative to the object, by using a pin hole model, a road surface profiling, or the like.

For example, the camera 310 may acquire the information on the distance to the object and the information on the speed relative to the object, based on information on disparity in stereo images acquired by a stereo camera 310a.

For example, the camera 310 may be disposed near a front windshield, in the interior of the vehicle 100, in order to acquire images of the front of the vehicle 100. Alternatively, the camera 310 may be disposed around a front bumper or a radiator grill.

For example, the camera 310 may be disposed near a rear glass in the interior of the vehicle 100 in order to acquire images of the rear of the vehicle 100. Alternatively, the camera 310 may be disposed around a rear bumper, a trunk, or a tailgate.

For example, the camera 310 may be disposed near at least one of the side windows in the interior of the vehicle 100 in order to acquire images of the lateral side of the vehicle 100. Alternatively, the camera 310 may be disposed around a side mirror, a fender, or a door.

The camera 310 may provide an acquired image to the processor 370.

The radar 320 may include an electromagnetic wave transmission unit and an electromagnetic wave reception unit.

The radar 320 may be implemented as a pulse radar type or a continuous wave radar type based on the principle of emission of an electronic wave.

The radar 320 may be implemented as a Frequency Modulated Continuous Wave (FMCW) type radar or a Frequency Shift Keying (FSK) type radar according to the waveform of a signal among the continuous wave radar type.

The radar 320 may detect an object, through the medium of an electromagnetic wave, by employing a time of flight (TOF) method or a phase-shift method, and may detect a location of the detected object, the distance to the detected object, and the speed relative to the detected object.

Further, the radar 320 may be located at an appropriate position outside the vehicle 100 in order to detect an object located in front of the vehicle 100, an object located in the rear of the vehicle 100, or an object located in the lateral side of the vehicle 100.

The lidar 330 may include a laser transmission unit and a laser reception unit. The lidar 330 may be implemented by a time of flight (TOF) method or a phase-shift method.

The lidar 330 may be implemented as a drive type or a non-drive type.

When implemented as the drive type, the lidar 300 may rotate by a motor and detect an object around the vehicle 100.

When implemented as the non-drive type lidar, the lidar 300 may detect an object located within a certain distance from the vehicle 100 by an optical steering. The vehicle 100 may include a plurality of non-drive type lidars 330.

The lidar 330 may detect an object, through the medium of laser light, based on the time of flight (TOF) method or the phase-shift method, and may detect a location of the detected object, the distance to the detected object, and the speed relative to the detected object.

Further, the lidar 330 may be located at an appropriate position outside the vehicle 100 in order to detect an object located in front of the vehicle 100, an object located in the rear of the vehicle 100, or an object located in the lateral side of the vehicle 100.

The ultrasonic sensor 340 may include an ultrasonic wave transmission unit and an ultrasonic wave reception unit. The ultrasonic sensor 340 may detect an object based on an ultrasonic wave, and may detect a location of the detected object, the distance to the detected object, and the speed relative to the detected object.

Further, the ultrasonic sensor 340 may be disposed at an appropriate position outside the vehicle 100 in order to detect an object located in front of the vehicle 100, an object located in the rear of the vehicle 100, and an object located in the lateral side of the vehicle 100.

The infrared sensor 350 may include an infrared light transmission unit and an infrared light reception unit. The infrared sensor 350 may detect an object based on infrared light, and may detect a location of the detected object, the distance to the detected object, and the speed relative to the detected object.

The infrared sensor 350 may be disposed at an appropriate position outside the vehicle 100 in order to detect an object located in front of the vehicle 100, an object located in the rear of the vehicle 100, or an object located in the lateral side of the vehicle 100.

The processor 370 may control the overall operation of each unit of the object detection device 300.

The processor 370 may detect and classify an object by comparing data sensed by the camera 310, the radar 320, the lidar 330, the ultrasonic sensor 340, and the infrared sensor 350 with pre-stored data.

The processor 370 may detect and track an object, based on acquired images. The processor 370 may calculate the distance to the object and the speed relative to the object by using image processing algorithms.

For example, the processor 370 may acquire information on the distance to the object and information on the speed relative to the object, based on the change in size of the object depending on time, from acquired images.

For example, the processor 370 may acquire information on the distance to the object or information on the speed relative to the object, by employing a pin hole model or a road surface profiling.

For example, the processor 370 may acquire information on the distance to the object and information on the speed relative to the object, based on disparity information in stereo images acquired from the stereo camera 310a.

The processor 370 may detect and track an object, based on a reflection electromagnetic wave which is formed as a transmitted electromagnetic wave is reflected by an object and returned. Based on the electromagnetic wave, the processor 370 may calculate the distance to the object and the speed relative to the object.

The processor 370 may detect and track an object, based on a reflection laser light which is formed as a transmitted laser is reflected by an object and returned. Based on the laser light, the processor 370 may calculate the distance to the object and the speed relative to the object.

The processor 370 may detect and track an object, based on a reflection ultrasonic wave which is formed as a transmitted ultrasonic wave is reflected by an object and returned. Based on the ultrasonic wave, the processor 370 may calculate the distance to the object and the speed relative to the object.

The processor 370 may detect and track an object based on reflection infrared light which is formed as a transmitted infrared light is reflected by an object and returned. Based on the infrared light, the processor 370 may calculate the distance to the object and the speed relative to the object.

In some embodiments, the object detection device 300 may include a plurality of processors 370, or may not include the processor 370. For example, each of the camera 310, the radar 320, the lidar 330, the ultrasonic sensor 340, and the infrared sensor 350 may include its own processor.

When the object detection device 300 does not include the processor 370, the object detection device 300 may operate under the control of the controller 170 or a processor inside the vehicle 100.

The object detection device 300 may operate under the control of the controller 170.

The communication device 400 is an apparatus for performing communication with an external device. Here, the external device may be other vehicle, a mobile terminal, or a server.

To perform communication, the communication device 400 may include at least one of a transmission antenna, a reception antenna, a Radio Frequency (RF) circuit capable of implementing various communication protocols, and an RF device.

The communication device 400 may include a short-range communication unit 410, a location information unit 420, a V2X communication unit 430, an optical communication unit 440, a broadcasting transmission and reception unit 450, and/or a processor 470.

In some embodiments, the communication device 400 may further include other components in addition to the aforementioned components, or may not include some of the aforementioned components.

The short-range communication unit 410 is a unit for performing short-range communication. The short-range communication unit 410 may support short-range communication by using at least one of Bluetooth^{™}, Radio Frequency IDdentification (RFID), Infrared Data Association (IrDA), Ultra-WideBand (UWB), ZigBee, Near Field Communication (NFC), Wireless-Fidelity (Wi-Fi), Wi-Fi Direct, and Wireless Universal Serial Bus (Wireless USB).

The short-range communication unit 410 may form wireless area networks to perform short-range communication between the vehicle 100 and at least one external device.

The location information unit 420 is a unit for acquiring location information of the vehicle 100. For example, the location information unit 420 may include a Global Positioning System (GPS) module or a Differential Global Positioning System (DGPS) module.

The V2X communication unit 430 is a unit for performing a wireless communication with a server (vehicle to infra (V2I)), other vehicle (vehicle to vehicle (V2V)), or a pedestrian (vehicle to pedestrian (V2P)). The V2X communication unit 430 may include a RF circuitry capable of implementing communication with infrastructure (V2I), vehicle-to-vehicle communication (V2V), and communication with pedestrian (V2P) protocols.

The optical communication unit 440 is a unit for performing a communication with an external device through the medium of light. The optical communication unit 440 may include a light emitting unit, which converts an electrical signal into an optical signal and transmits the optical signal to the outside, and a light reception unit which converts a received optical signal into an electrical signal.

In some embodiments, the light emitting unit may be formed as one body with a lamp included in the vehicle 100.

The broadcasting transmission and reception unit 450 is a unit for receiving a broadcast signal from an external broadcasting management server, or transmitting a broadcast signal to the broadcasting management server, through a broadcasting channel. The broadcasting channel may include a satellite channel, and a terrestrial channel. The broadcast signal may include a TV broadcast signal, a radio broadcast signal, and a data broadcast signal.

The communication device 400 may further include an Intelligent Transport Systems (ITS) communication unit 460.

The ITS communication unit 460 may exchange information, data, or signals with a traffic system. The ITS communication unit 460 may provide acquired information or data to the traffic system. The ITS communication unit 460 may receive information, data, or signals from the traffic system. For example, the ITS communication unit 460 may receive traffic information from the traffic system, and provide the traffic information to the controller 170. For example, the ITS communication unit 460 may receive a control signal from the traffic system, and provide the control signal to the controller 170 or a processor provided in the vehicle 100.

The processor 470 may control the overall operation of each unit of the communication device 400.

In some embodiments, the communication device 400 may include a plurality of processors 470, or may not include the processor 470.

When the communication device 400 does not include the processor 470, the communication device 400 may operate under the control of the controller 170 or a processor of other device inside of the vehicle 100.

Meanwhile, the communication device 400 may implement a vehicle display device, together with the user interface device 200. In this instance, the vehicle display device may be referred to as a telematics device or an Audio Video Navigation (AVN) device.

The communication device 400 may operate under the control of the controller 170.

The driving control device 500 is a device that receives a user input for driving.

In the case of manual mode, the vehicle 100 may operate based on a signal provided by the driving control device 500.

The driving control device 500 may include a steering input device 510, an acceleration input device 530, and/or a brake input device 570.

The steering input device 510 may receive an input for the direction of travel of the vehicle 100 from a user. The steering input device 510 is preferably formed in a wheel shape to enable steering input by rotation. In some embodiments, the steering input device may be formed in the form of a touch screen, touch pad, or button.

The acceleration input device 530 may receive input from a user to accelerate the vehicle 100. The brake input device 570 may receive an input from a user to decelerate the vehicle 100. The acceleration input device 530 and the brake input device 570 are preferably formed in the form of pedal. In some embodiments, the acceleration input device or brake input device may be formed in the form of a touchscreen, touchpad, or button.

The driving control device 500 may operate under the control of the controller 170.

The vehicle operating device 600 is a device that electrically controls the operation of various devices of the vehicle 100.

The vehicle operating device 600 may include a power train operating unit 610, a chassis operating unit 620, a door/window operating unit 630, a safety apparatus operating unit 640, a lamp operating unit 650, and/or an air conditioner operating unit 660.

In some embodiments, the vehicle operating device 600 may further include other components in addition to the aforementioned components, or may not include some of the aforementioned components.

Meanwhile, the vehicle operating device 600 may include a processor. Each unit of the vehicle operating device 600 may include its own processor. The power train operating unit 610 may control the operation of a power train. The power train operating unit 610 may include a power source operating unit 611 and/or a transmission operating unit 612. The power source operating unit 611 may control a power source of the vehicle 100.

When a fossil fuel-based engine is the power source, the power source operating unit 611 may perform electronic control of the engine. Thus, the power source operating unit 611 may control the output torque of the engine. The power source operating unit 611 may adjust the output toque of the engine, under the control of the controller 170.

When an electric motor is the power source, the power source operating unit 611 may control the motor. The power source operating unit 610 may control the RPM and toque of the motor, under the control of the controller 170.

The transmission operating unit 612 may control the transmission.

The transmission operating unit 612 may adjust a state of the transmission. The transmission operating unit 612 may adjust the state of the transmission to a drive (D), reverse (R), neutral (N), or parking (P) state.

Meanwhile, when an engine is the power source, the transmission operating unit 612 may adjust a gear-engaged state, in the drive D state.

The chassis operating unit 620 may control the operation of a chassis

The chassis operating unit 620 may include a steering operating unit 621, a brake operating unit 622, and/or a suspension operating unit 623.

The steering operating unit 621 may perform electronic control of a steering apparatus provided inside the vehicle 100. The steering operating unit 621 may change the direction of travel of the vehicle 100.

The brake operating unit 622 may perform electronic control of a brake apparatus provided inside the vehicle 100. For example, the brake operating unit 622 may reduce the speed of the vehicle 100 by controlling the operation of a brake located at a wheel.

Meanwhile, the brake operating unit 622 may control each of a plurality of brakes individually. The brake operating unit 622 may differently control the braking force applied to a plurality of wheels.

The suspension operating unit 623 may perform electronic control of a suspension apparatus inside the vehicle 100. For example, when the road surface is uneven, the suspension operating unit 623 may control the suspension apparatus so as to reduce the vibration of the vehicle 100.

Meanwhile, the suspension operating unit 623 may control a plurality of suspensions individually.

The door/window operating unit 630 may perform electronic control of a door apparatus or a window apparatus inside the vehicle 100.

The door/window operating unit 630 may include a door operating unit 631 and a window operating unit 632.

The door operating unit 631 may control the door apparatus. The door operating unit 631 may control opening or closing of a plurality of doors included in the vehicle 100. The door operating unit 631 may control opening or closing of a trunk or a tail gate. The door operating unit 631 may control opening or closing of a sunroof.

The window operating unit 632 may perform electronic control of the window apparatus. The window operating unit 632 may control opening or closing of a plurality of windows included in the vehicle 100.

The safety apparatus operating unit 640 may perform electronic control of various safety apparatuses provided inside the vehicle 100.

The safety apparatus operating unit 640 may include an airbag operating unit 641, a seatbelt operating unit 642, and/or a pedestrian protection equipment operating unit 643.

The airbag operating unit 641 may perform electronic control of an airbag apparatus inside the vehicle 100. For example, upon detection of a dangerous situation, the airbag operating unit 641 may control an airbag to be deployed.

The seatbelt operating unit 642 may perform electronic control of a seatbelt apparatus inside the vehicle 100. For example, upon detection of a dangerous situation, the seatbelt operating unit 642 may control passengers to be fixed onto seats 110FL, 110FR, 110RL, and 110RR with seatbelts.

The pedestrian protection equipment operating unit 643 may perform electronic control of a hood lift and a pedestrian airbag. For example, upon detection of a collision with a pedestrian, the pedestrian protection equipment operating unit 643 may control a hood lift and a pedestrian airbag to be deployed.

The lamp operating unit 650 may perform electronic control of various lamp apparatuses provided inside the vehicle 100.

The air conditioner operating unit 660 may perform electronic control of an air conditioner inside the vehicle 100. For example, when the inner temperature of the vehicle 100 is high, the air conditioner operating unit 660 may operate the air conditioner so as to supply cool air to the inside of the vehicle 100.

The vehicle operating device 600 may include a processor. Each unit of the vehicle operating device 600 may include a processor individually.

The vehicle operating device 600 may operate under the control of the controller 170.

The operation system 700 is a system for controlling the overall driving operation of the vehicle 100. The operation system 700 may operate in the autonomous driving mode.

The operation system 700 may include the driving system 710, the parking exit system 740, and/or the parking system 750.

In some embodiments, the operation system 700 may further include other components in addition to the aforementioned components, or may not include some of the aforementioned component.

Meanwhile, the operation system 700 may include a processor. Each unit of the operation system 700 may include its own processor individually.

Meanwhile, in some embodiments, when the operation system 700 is implemented as software, the operation system 700 may be a subordinate concept of the controller 170.

Meanwhile, in some embodiments, the operation system 700 may be a concept including at least one of the user interface device 270, the object detection device 300, the communication device 400, the driving control device 500, the vehicle operating device 600, the navigation system 770, the sensing unit 120, and the controller 170.

The driving system 710 may perform driving of the vehicle 100.

The driving system 710 may perform driving of the vehicle 100 by providing a control signal to the vehicle operating device 600, in response to reception of navigation information from the navigation system 770.

The driving system 710 may perform driving of the vehicle 100 by providing a control signal to the vehicle operating device 600, in response to reception of object information from the object detection device 300.

The driving system 710 may perform driving of the vehicle 100 by providing a control signal to the vehicle operating device 600, in response to reception of a signal from an external device through the communication device 400.

The driving system 710 may include at least one of the user interface device 270, the object detection device 300, the communication device 400, the driving control device 500, the vehicle operating device 600, the navigation system 770, the sensing unit 120, and the controller, and perform driving of the vehicle 100.

Such a driving system 170 may be referred to as a vehicle driving control apparatus.

The parking exit system 740 may perform departure of the vehicle 100.

The parking exit system 740 may perform departure of the vehicle 100, by providing a control signal to the vehicle operating device 600, in response to reception of navigation information from the navigation system 770.

The parking exit system 740 may perform departure of the vehicle 100, by providing a control signal to the vehicle operating device 600, in response to reception of object information from the object detection device 300.

The parking exit system 740 may perform departure of the vehicle 100, by providing a control signal to the vehicle operating device 600, in response to reception of a signal from an external device, through the communication device 400.

Meanwhile, the parking exit system 740 may include at least one of the user interface device 200, the object detection device 300, the communication device 400, the driving control device 500, the vehicle operating device 600, the navigation system 770, the sensing unit 120, and the controller 170, and perform departure of the vehicle 100.

Such a parking exit system 740 may be referred to as a vehicle parking exit control apparatus.

The parking system 750 may park the vehicle 100.

The parking system 750 may park the vehicle 100, by providing a control signal to the vehicle operating device 600, in response to reception of navigation information from the navigation system 770.

The parking system 750 may park the vehicle 100, by providing a control signal to the vehicle operating device 600, in response to reception of object information from the object detection device 300.

The parking system 750 may park the vehicle 100, by providing a control signal to the vehicle operating device 600, in response to reception of a signal from an external device.

The parking system 750 may include at least one of the user interface device 200, the object detection device 300, the communication device 400, the driving control device 500, the vehicle operating device 600, the navigation system 770, the sensing unit 120, and the controller 170, and may park the vehicle 100.

Such a parking system 750 may be referred to as a vehicle parking control apparatus.

The navigation system 770 may provide navigation information. The navigation system 770 may include at least one of map information, set destination information, route information according to the set destination, information on various objects on a route, lane information, and information on a current location of vehicle.

The navigation system 770 may include a memory and a processor. The memory may store navigation information. The processor may control the operation of the navigation system 770.

In some embodiments, the navigation system 770 may update pre-stored information, by receiving information from an external device, through the communication device 400.

In some embodiments, the navigation system 770 may be classified as a sub-element of the user interface device 200.

The sensing unit 120 may sense the state of the vehicle.

The sensing unit 120 may include an inertial navigation unit (IMU) sensor, a collision sensor, a wheel sensor, a speed sensor, an inclination sensor, a weight sensor, a heading sensor, a position module, a vehicle vehicle drive/reverse sensor, a battery sensor, a fuel sensor, a tire sensor, a steering sensor for steering wheel rotation, a vehicle internal temperature sensor, a vehicle internal humidity sensor, an ultrasonic sensor, an illuminance sensor, an accelerator pedal position sensor, a brake pedal position sensor, and the like.

Meanwhile, the inertial navigation unit (IMU) sensor may include one or more of an acceleration sensor, a gyro sensor, and a magnetic sensor.

The sensing unit 120 may acquire a sensing signal for vehicle posture information, vehicle motion information, vehicle yaw information, vehicle roll information, vehicle pitch information, vehicle collision information, vehicle direction information, vehicle position information (GPS information), vehicle angle information, vehicle speed information, vehicle acceleration information, vehicle inclination information, vehicle drive/reverse information, battery information, fuel information, tire information, vehicle lamp information, vehicle internal temperature information, vehicle internal humidity information, steering wheel rotation angle, vehicle external illumination, pressure applied to accelerator pedal, and pressure applied to brake pedal.

In addition, the sensing unit 120 may further include an accelerator pedal sensor, a pressure sensor, an engine speed sensor, an Air Flow-rate Sensor (AFS), an Air Temperature Sensor (ATS), a Water Temperature Sensor (WTS), a Throttle Position Sensor (TPS), a Top Dead Center (TDC) sensor, a Crank Angle Sensor (CAS), and the like.

The sensing unit 120 may generate vehicle state information, based on sensing data.

The vehicle state information may be information that is generated based on data detected by a variety of sensors provided inside a vehicle.

For example, the vehicle state information may include vehicle posture information, vehicle speed information, vehicle inclination information, vehicle weight information, vehicle direction information, vehicle battery information, vehicle fuel information, vehicle tire pressure information, vehicle steering information, vehicle internal temperature information, vehicle internal humidity information, pedal position information, vehicle engine temperature information, and the like.

The interface unit 130 may serve as a passage for various kinds of external devices that are connected to the vehicle 100. For example, the interface unit 130 may have a port that is connectable to a mobile terminal, and may be connected to the mobile terminal through the port. In this case, the interface unit 130 may exchange data with the mobile terminal.

Meanwhile, the interface unit 130 may serve as a passage for the supply of electrical energy to a mobile terminal connected thereto. When the mobile terminal is electrically connected to the interface unit 130, the interface unit 130 may provide electrical energy, which is supplied from the power supply unit 190, to the mobile terminal, under the control of the controller 170.

The memory 140 is electrically connected to the controller 170. The memory 140 may store basic data for each unit, control data for the operation control of each unit, input/output data, and the like. The memory 140 may be, in hardware, various storage devices, such as a ROM, a RAM, an EPROM, a flash drive, and a hard drive. The memory 140 may store various data for the overall operation of the vehicle 100, such as programs for the processing or control of the controller 170.

Meanwhile, the memory 140 may be formed as one body with the controller 170, or may be implemented as a sub-element of the controller 170.

The controller 170 may control the overall operation of each unit inside the vehicle 100. The controller 170 may be referred to as an Electronic Control Unit (ECU).

The power supply unit 190 may supply power required to operate each component, under the control of the controller 170. In particular, the power supply unit 190 may receive power from a battery or the like inside the vehicle 100.

At least one processor and the controller 170 included in the vehicle 100 may be implemented by using at least one of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and electric units for the implementation of other functions.

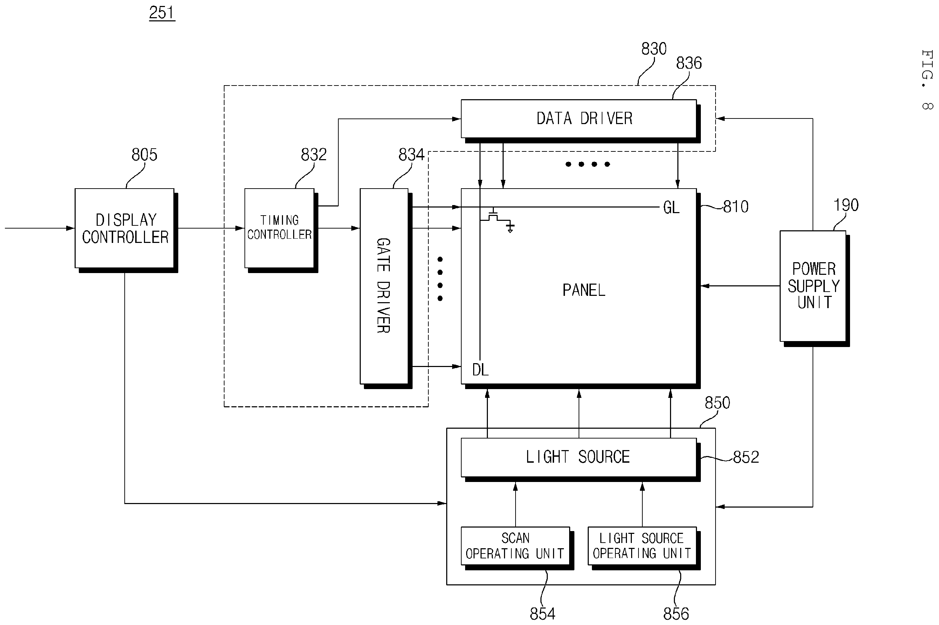

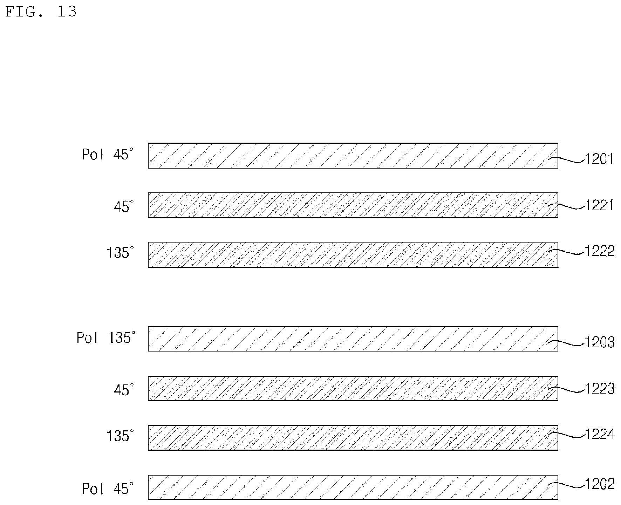

FIGS. 8 to 19 are diagrams for explaining a vehicle display device, according to an embodiment of the present disclosure.

Referring to FIG. 8, the vehicle display device 251 may output a certain image, based on an image signal. For example, the vehicle display device 251 may output graphic objects representing instrument panel information of the vehicle 100, various image contents, etc., based on the image signal.

The vehicle display device 251 may include a display controller 805, a display panel 810, a panel operating unit 830, and/or a backlight unit 850.

The display controller 805 may receive an image signal from the controller 170. The display controller 805 may process image signals. The display controller 805 may be equipped with a decoder, a scaler, a formatter, etc. to process image signals. The display controller 805 may be included in the controller 170. The display controller 805 may be included in the processor 270. The display controller 805 can be provided separately from the controller 170 and/or the processor 270.

According to one embodiment, the display controller 805 may include a demultiplexer that demultiplexes the input stream. The demultiplexer may separate the input stream into image, voice and/or data signals. The decoder may decode the demultiplexed image signal. The scaler may perform scaling so that the resolution of the decoded image signal may be output to the display panel 810.

According to one embodiment, the display controller 805 may include a frame rate converter (FRC) that converts the frame rate of the input image. Meanwhile, the frame rate converter may output intactly without separate frame rate conversion.

The formatter may change the format of the input image signal into an image signal for display on the display panel 810 and output it. The demultiplexer, the decoder, the scaler, the frame rate converter, and/or the formatter may not be provided inside the display controller 805, but may be individually provided separately, or may be provided separately as a single module.

The display panel 810 may include a plurality of pixels (P). A plurality of pixels (P) may be connected to a plurality of gate lines (GL) and data lines (DL) that are disposed to intersect in a matrix form. A plurality of thin film transistors (TFTs) may be disposed at intersections of the plurality of gate lines (GL) and the data lines (DL). A plurality of pixels (P) may be formed at the intersection of the plurality of data lines (DL) and the plurality of gate lines (GL). Each of the plurality of pixels (P) may be connected to a data line and a gate line.

When the vehicle display device 251 is a liquid crystal display (LCD), a plurality of pixels may include a liquid crystal layer. When the vehicle display device 251 is an OLED display device, a plurality of pixels may include organic light emitting diode (OLED). The display panel 810 may include a first substrate on which an operating element such as a thin film transistor (TFT) and a pixel electrode connected thereto are formed, a second substrate on which a common electrode is formed, and/or a liquid crystal layer formed between the first substrate and the second substrate. The disposition of liquid crystal in the display panel 810 may be an in-plane switching (IPS) type.

The panel operating unit 830 may operate the display panel 810, based on control signals and/or data signals transmitted from the display controller 805. The panel operating unit 830 may include a timing controller 832, a gate driver 834, and/or a data driver 836.

The timing controller 832 may receive control signals, image signals, etc. from the display controller 805. For example, the timing controller 832 may receive an RGB signal, a vertical synchronization signal (Vsync), etc. from the display controller 805. The timing controller 832 may control the gate driver 834 and/or data driver 836 in response to a control signal. The timing controller 832 may rearrange the image signal according to a specification of the data driver 836 and transmit it to the data driver 836.

The gate driver 834 and the data driver 836 may supply scanning signals and image signals to the display panel 810 through the gate line (GL) and the data line (DL), according to the control of the timing controller 832.

Meanwhile, the data driver 836 may include a plurality of source driver integrated circuits (ICs) (not shown) corresponding to a plurality of data lines DL.

The backlight unit 850 may supply light to the display panel 810. To this end, the backlight unit 850 may include at least one light source 852 that outputs light, a scan operating unit 854 that controls the scanning operation of the light source 852, and/or a light source operating unit 856 that turns on/off the light source 852.

The vehicle display device 251 may display a certain image by using light emitted from the backlight unit 850, in a state in which the light transmittance of the liquid crystal layer is adjusted by an electric field formed between the pixel electrode and the common electrode of the display panel 810.

The power supply unit 190 may supply a common electrode voltage (Vcom) to the display panel 810. The power supply unit 190 may supply a gamma voltage to the data driver 836. The power supply unit 190 may supply an operating power for operating the light source 852 to the backlight unit 850.

The vehicle display device 251 may be driven by local dimming. The backlight unit 850 may be divided into a plurality of blocks. The backlight unit 850 may be operated for each divided block. For example, when the backlight unit 850 is operated by a local dimming method, the display panel 810 may have a plurality of divided areas corresponding to each block of the backlight unit 850. At this time, the intensity of light emitted from each of blocks of the backlight unit 850 may be adjusted, according to the luminance level of each of the divided areas of the display panel 810, for example, the peak value of the gray level or the color coordinate signal. That is, the vehicle display device 251 may reduce the intensity of light emitted from the block corresponding to the dark part of the image, among the blocks of the backlight unit 850, and may increase the intensity of light emitted from the block corresponding to the bright part of the image. Through this, the contrast ratio and clarity of the image output through the vehicle display device 251 may be improved.

The vehicle display device 251 may set a dimming value for each block, based on a representative value for each block of the backlight unit 850. The display controller 805 may determine the representative value for each block of the backlight unit 850, based on the image signal.

According to one embodiment, the representative value for each block may include the luminance level of the image corresponding to each of blocks of the backlight unit 850. The display controller 805 may determine the luminance level for the entire area and/or a partial area of the image based on the image signal.

For example, the display controller 805 may determine an average luminance level (average picture level: APL) for each of a plurality of divided areas corresponding to each of the blocks of the backlight unit 850, an average luminance level (average picture level: APL) for the entire area of image, and the like.

The display controller 805 may calculate a dimming value for each of the blocks of the backlight unit 850, based on the luminance level for the entire area and/or a partial area of the image. For example, the display controller 805 may calculate a dimming value for each of the blocks of the backlight unit 850, based on the luminance level of each of the plurality of divided areas, the luminance level of the surrounding area, the luminance level of the entire area, and the like. At this time, the display controller 805 may calculate a dimming value so as to reduce the intensity of light emitted from the block in the area with a low luminance level, and to increase the intensity of light emitted from the block in the area with a high luminance level, among the blocks of the backlight unit 850.

The display controller 805 may output the calculated dimming value to the backlight unit 850. The display controller 805 may output a signal including the calculated dimming value to the backlight unit 850. The backlight unit 850 may adjust the intensity of light emitted from the light source 852, based on the dimming value received from the display controller 805.

The light source 852 may be turned on or off depending on an operating signal received from the light source operating unit 856.

The light source operating unit 856 may generate an operating signal based on the dimming value output from the display controller 805. The operating signal may be a pulse width modulation (PWM) signal. For example, the intensity of light emitted from the light source 852 may be adjusted according to the amplitude (e.g., voltage) of the operating signal received from the light source operating unit 856. That is, as the voltage applied to the light source 852 increases, the intensity of light emitted from the light source 852 may increase. For example, the time during which light is emitted from the light source 852 may be adjusted according to the pulse width of the operating signal received from the light source operating unit 856.

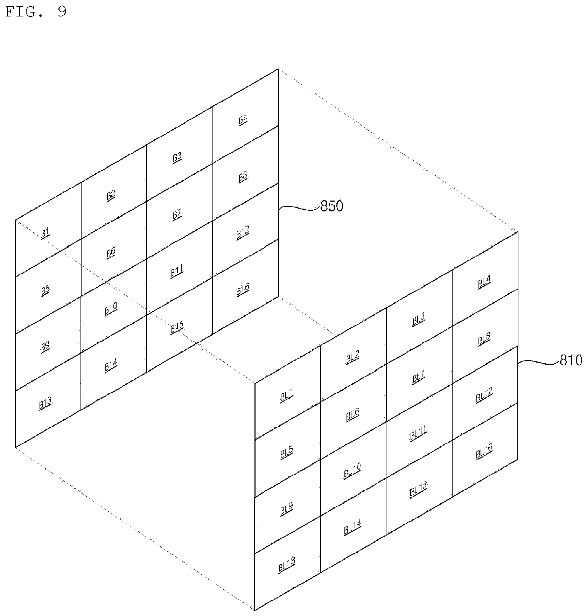

Referring to FIG. 9, the backlight unit 850 according to an embodiment of the present disclosure may be implemented as a direct type.

The display panel 810 may be composed of a plurality of divided areas. FIG. 9 illustrates that the display panel 810 is equally divided into 16 divided areas (BL1 to BL16), but it is not limited thereto. Each of the plurality of divided areas (BL1 to BL16) may include a plurality of pixels.

The backlight unit 850 may have a structure in which a plurality of optical sheets and a diffusion plate are stacked below the display panel 810, and a plurality of light sources are disposed below the diffusion plate.

The blocks (B1 to B16) of the backlight unit 850 may respectively correspond to the divided areas (BL1 to BL16) of the display panel 810. For example, a first block B1 of the backlight unit 850 may correspond to a first divided area BL1 of the display panel 810. At this time, the intensity of light incident on the first divided area BL1 of the display panel 810 may be adjusted by the light source 852 included in the first block B1 of the backlight unit 850 disposed at a position corresponding to the first divided area BL1 of the display panel 810.

The light source 852 provided in the blocks (B1 to B16) of the backlight unit 850 may be implemented as point light sources such as a light emitting diode (LED).

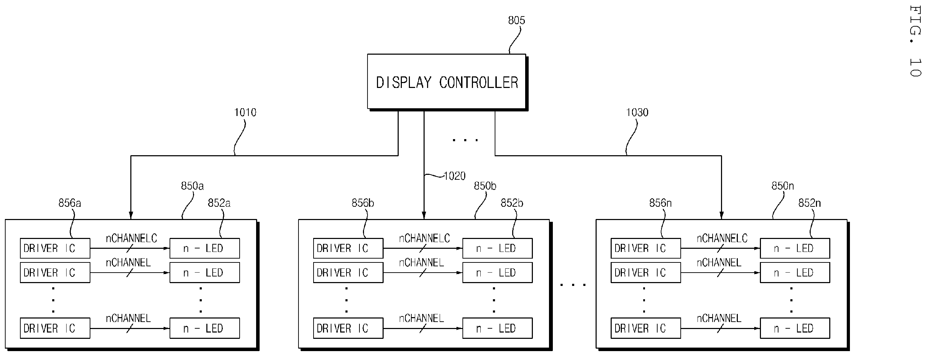

Referring to FIG. 10, the backlight unit 850 may include a plurality of operating units 850a to 850n.

The plurality of operating units 850a to 850n may receive dimming values calculated for a plurality of blocks, a vertical synchronization signal (Vsync) corresponding to one frame, etc. from the display controller 805. The plurality of operating units 850a to 850n may receive signals by using a Serial Peripheral Interface (SPI) communication.

The plurality of operating units 850a to 850n may receive dimming values calculated for a plurality of blocks, a vertical synchronization signal (Vsync) corresponding to one frame, etc. The plurality of operating units 850a to 850n may receive signals by using a Serial Peripheral Interface (SPI) communication.

The plurality of operating units 850a to 850n may include a light source operating unit 856a to 856n and/or a plurality of light sources 852a to 852n.

Each light source operating unit 856a to 856n may include at least one driver IC. Each of a plurality of driver ICs may output an operating signal for controlling the intensity of n blocks by using n channels. Each of the plurality of driver ICs may output an operating signal that adjusts the intensity of the light source 852, based on the dimming value calculated for the plurality of blocks. For example, if each driver IC outputs an operating signal by using 16 channels, each driver IC may adjust the intensity of the light source 852 included in 16 blocks.

At this time, when a first light source operating unit 856a includes 4 driver ICs, the first light source operating unit 856a may adjust the intensity of the light sources 852 included in 4x16, i.e., 64 blocks, among the divided blocks of the backlight unit 850.

Each of the plurality of operating units 850a to 850n may include a substrate. For example, the substrate may be a printed circuit board (PCB). Components included in the plurality of operating units 850a to 850n, for example, driver ICs, may be respectively mounted on a plurality of substrates corresponding to the plurality of operating units 850a to 850n. Substrates corresponding to the plurality of operating units 850a to 850n may be disposed adjacent to each other according to the order of the divided blocks of the backlight unit 850.

Each of the plurality of operating units 850a to 850n may be electrically connected to the display controller 805 through a cable 1010 to 1030 corresponding to the plurality of operating units 850a to 850n. For example, the cable 1010 to 1030 corresponding to the plurality of operating units 850a to 850n may be respectively connected to a connector mounted on the substrate corresponding to the plurality of operating units 850a to 850n.

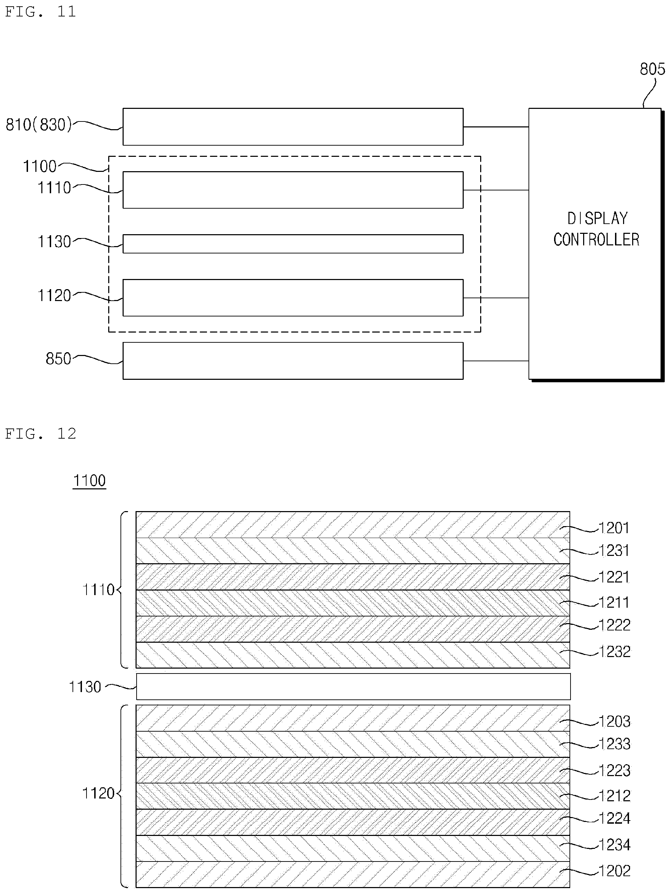

Referring to FIGS. 11 to 13, the vehicle display device 251 may include a viewing angle adjustment panel 1100.

The viewing angle adjustment panel 1100 may adjust the viewing angle of the display panel 810. Here, the viewing angle may mean an angle at which a user may watch an image of a certain quality or higher, when the user is looking at the display panel 810.

The viewing angle adjustment panel 1100 may adjust the viewing angle according to the control of the display controller 805.

The viewing angle adjustment panel 1100 may include a first adjustment unit 1110, a second adjustment unit 1120, and/or a film 1130.

The film 1130 may be configured to restrict the emission of light to a given angle.

According to one embodiment, the film 1130 may be disposed between the first adjustment unit 1110 and the second adjustment unit 1120, but is not limited thereto.

For example, the film 1130 may be disposed on the upper end of the first adjustment unit 1110, the lower end of the second adjustment unit 1120, etc.

Each of the first adjustment unit 1110 and the second adjustment unit 1120 may include a liquid crystal layer 1211, 1212 made of liquid crystal.

Each of the first adjustment unit 1110 and the second adjustment unit 1120 may include a plurality of alignment layers that define the arrangement of the liquid crystal included in the liquid crystal layer 1211, 1212.

The direction in which the liquid crystal included in the liquid crystal layer 1211, 1212 faces may be defined by the characteristics of the liquid crystal and the pattern of the plurality of alignment layers.

The first adjustment unit 1110 may include a first upper alignment layer 1221 disposed on the upper side of a first liquid crystal layer 1211 and a first lower alignment layer 1222 disposed on the lower side of the first liquid crystal layer 1211. For example, the direction in which the liquid crystal is arranged by the first upper alignment layer 1221 and the direction in which the liquid crystal is arranged by the first lower alignment layer 1222 may be perpendicular to each other.

The second adjustment unit 1120 may include a second upper alignment layer 1223 disposed on the upper side of a second liquid crystal layer 1212 and a second lower alignment layer 1224 disposed on the lower side of the second liquid crystal layer 1212.

For example, the direction in which the liquid crystal is arranged by the second upper alignment layer 1223 and the direction in which the liquid crystal is arranged by the second lower alignment layer 1224 may be perpendicular to each other.

Each of the first adjustment unit 1110 and the second adjustment unit 1120 may include a plurality of substrates on which electrode is formed.

The electrode may be formed of a metal oxide such as Indium Tin Oxide (ITO) or Indium Zinc Oxide (IZO), but is not limited thereto.

The first adjustment unit 1110 may include a first upper substrate 1231 disposed on the upper side of the first liquid crystal layer 1211 and a first lower substrate 1232 disposed on the lower side of the first liquid crystal layer 1211.

The second adjustment unit 1120 may include a second upper substrate 1233 disposed on the upper side of the second liquid crystal layer 1212 and a second lower substrate 1234 disposed on the lower side of the second liquid crystal layer 1212.

The display controller 805 may adjust the viewing angle through control of the arrangement of liquid crystal included in the liquid crystal layer 1211, 1212. The viewing angle may vary depending on the degree to which the arrangement of liquid crystal included in the liquid crystal layer 1211, 1212 is changed. According to one embodiment, the arrangement of the liquid crystal may be a twisted nematic (TN) type, but is not limited thereto. For example, the liquid crystal arrangement type may include super-twisted nematic (STN), vertically aligned nematic (VAN), twisted vertically aligned nematic (TVAN), and hybrid aligned nematic (HAN).

The display controller 805 may control the voltage applied to the electrode of the plurality of substrates. Depending on the difference (hereinafter, referred to as voltage difference) between the voltages applied to the electrode of the plurality of substrates, the arrangement of the liquid crystal included in the liquid crystal layer 1211, 1212 may change. For example, according to the voltage difference between a first electrode of the first upper substrate 1231 and a second electrode of the first lower substrate 1232 corresponding to the first electrode, the arrangement of the liquid crystal corresponding to the first electrode and the second electrode may be changed.

According to one embodiment, as the voltage difference between the electrode of the first upper substrate 1231 and the electrode of the first lower substrate 1232 increases, the degree to which the arrangement of the liquid crystal included in the first liquid crystal layer 1211 is changed may also increase. At this time, as the degree to which the arrangement of the liquid crystal included in the liquid crystal layer 1211, 1212 is changed increases, the viewing angle may decrease. For example, when the voltage difference between the electrode of the first upper substrate 1231 and the electrode of the first lower substrate 1232 is a preset minimum value 0V, light may be emitted intactly through the liquid crystal layer 1211, 1212. For example, when the voltage difference between the electrode of the first upper substrate 1231 and the electrode of the first lower substrate 1232 is a preset maximum value of 4V or higher, light may be blocked by the liquid crystal layer 1211, 1212.

The viewing angle adjustment panel 1100 may include a plurality of polarizing plates. According to one embodiment, the viewing angle adjustment panel 1100 may include a first polarizing plate 1201 disposed on an upper end, a second polarizing plate 1202 disposed on a lower end, and/or a third polarizing plate 1203 disposed between the plurality of liquid crystal layers 1211 and 1212. For example, the first polarizing plate 1201 may be disposed on an upper end of the first adjustment unit 1110, and the second polarizing plate 1202 and the third polarizing plate 1203 may be disposed on an upper end and a lower end of the second adjustment unit 1120 respectively. According to one embodiment, the polarization axis of the first polarizing plate 1201 and the polarization axis of the second polarizing plate 1202 may be parallel to each other. The polarization axis of the third polarizing plate 1203 may be perpendicular to the polarization axis of the first polarizing plate 1201 and the polarization axis of the second polarizing plate 1202.

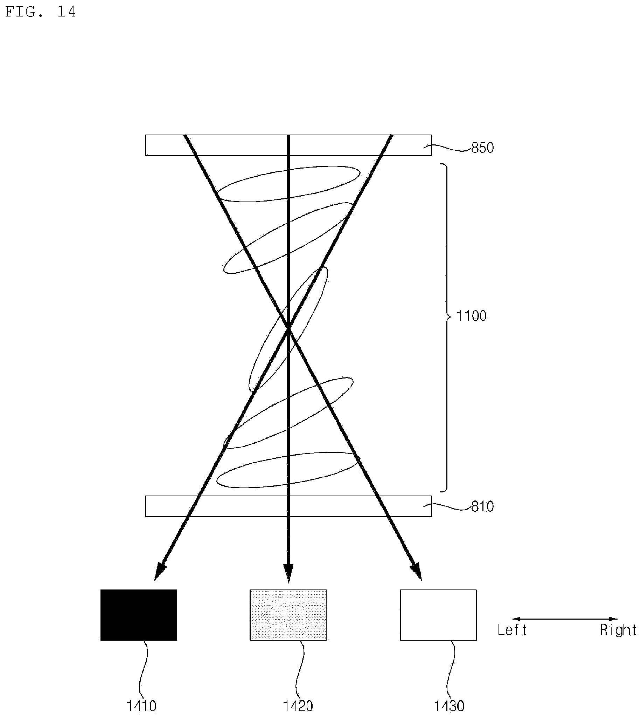

Referring to FIG. 14, light output from the backlight unit 850 may pass through the viewing angle adjustment panel 1100 and be emitted through the display panel 810. At this time, when the arrangement of the liquid crystal included in the viewing angle adjustment panel 1100 is changed, the luminance of the image output through the vehicle display device 251 may vary depending on the angle at which a user watches the display panel 810.

According to one embodiment, when a user looks at the display panel 810 from the left side based on the overall length direction, the luminance of the screen watched by the user may be relatively low compared to the front or right side (1410). In addition, as a user moves from left to right, the luminance of the screen watched by the user may gradually increase (1420, 1430).

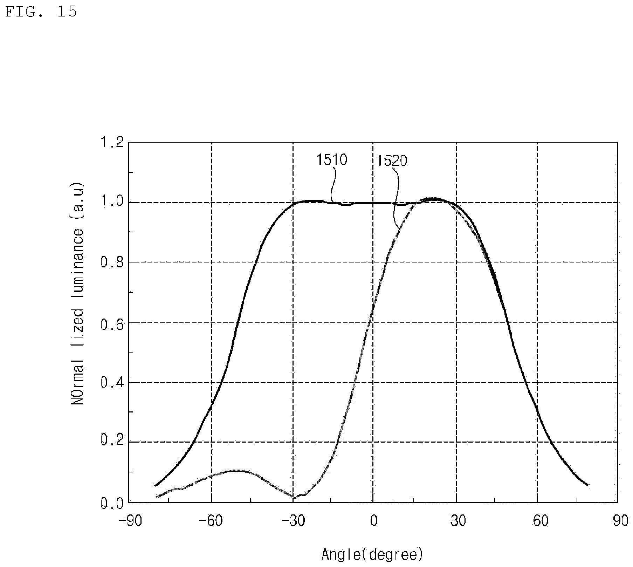

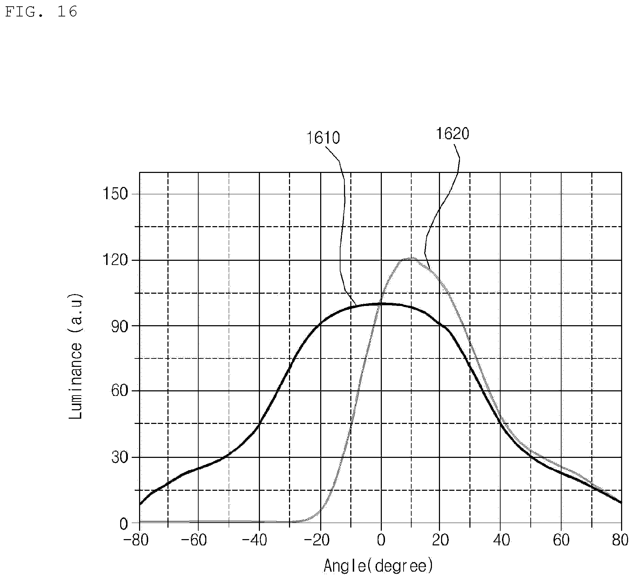

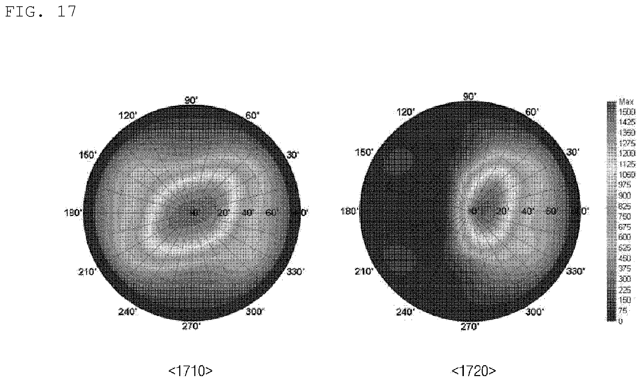

FIG. 15 is a diagram for explaining the case in which the film 1130 is not included in the viewing angle adjustment panel 1100, according to an embodiment of the present disclosure. FIGS. 16 and 17 are diagrams for explaining the case in which the film 1130 is included in the viewing angle adjustment panel 1100, according to an embodiment of the present disclosure.

In this disclosure, the case where the driver's seat is disposed in the left and the passenger seat is disposed in the right based on the overall length direction is described as an example, but the present disclosure is not limited thereto. For example, the present disclosure may be applied in relation to an embodiment in which the driver's seat is disposed in the right and the passenger seat is disposed in the left, or an embodiment in which the driver's seat is disposed in the center and the passenger seat is disposed in both sides, based on the overall length direction.

Referring to FIG. 15, the viewing angle of the display panel 810 may be determined depending on whether a certain mode for controlling the viewing angle is set through the viewing angle adjustment panel 1100. When a certain mode is set, the arrangement of liquid crystal included in the viewing angle adjustment panel 1100 may be changed to adjust the viewing angle. Thus, the luminance level 1510 of the image output through one area of the display panel 810 when a certain mode is not set may be different from the luminance level 1520 when a certain mode is set.

Based on the luminance level 1510 when a certain mode is not set and the luminance level 1520 when a certain mode is set, a user may be able to watch the image output through one area of the display panel 810 from various angles without distortion when a certain mode is not set. Based on the luminance level 1510 when a certain mode is not set, a user may watch the image without distortion while maintaining the viewing angle of one area of the display panel 810 at -30° to 30°. Meanwhile, as the angle at which a user watches one area of the display panel 810 becomes smaller than -30° or larger than 30°, the luminance of the screen that the user watches through the area of the display panel 810 may decrease. That is, even when the certain mode is not set, the viewing angle may be restricted by the viewing angle adjustment panel 1100 disposed between the display panel 810 and the backlight unit 850.

Based on the luminance level 1520 when a certain mode is set, as the angle at which a user watches one area of the display panel 810 becomes smaller than 0°, the luminance of the screen that the user watches through one area of the display panel 810 may decrease. That is, when a certain mode is set, as a user moves to the left where the driver's seat is located, the luminance of the screen that the user watches through one area of the display panel 810 may decrease.

In addition, if the angle between a user and one area of the display panel 810 is -30°, the luminance of the screen that the user watches through one area of the display panel 810 may be minimal. However, in the case where the angle between a user and one area of the display panel 810 is less than -30°, the luminance of the screen watched through one area of the display panel 810 may increase again.

Referring to FIGS. 16 and 17, when the viewing angle adjustment panel 1100 includes the film 1130, the angle at which the user watches one area of the display panel 810 is less than 0°, the luminance of the screen that a user watches through one area of the display panel 810 may decrease. However, compared to the case where a certain mode is set (1620, 1720), the viewing angle may be wider in the case where a certain mode is not set (1610, 1710).

Meanwhile, when a certain mode is set (1620, 1720), in the case where the angle between a user and one area of the display panel 810 is -25°, the luminance of the screen that the user watches through one area of the display panel 810 may be minimal. In this case, as the emission of light is restricted by the film 1130, even when the angle between a user and one area of the display panel 810 is less than - 25°, the luminance of the screen that the user watches through one area of the display panel 810 may be minimal. Therefore, if the angle between one area of the display panel 810 and the driver's seat is less than -25°, a user located in the driver's seat may be blocked from watching the image output through one area of the display panel 810.

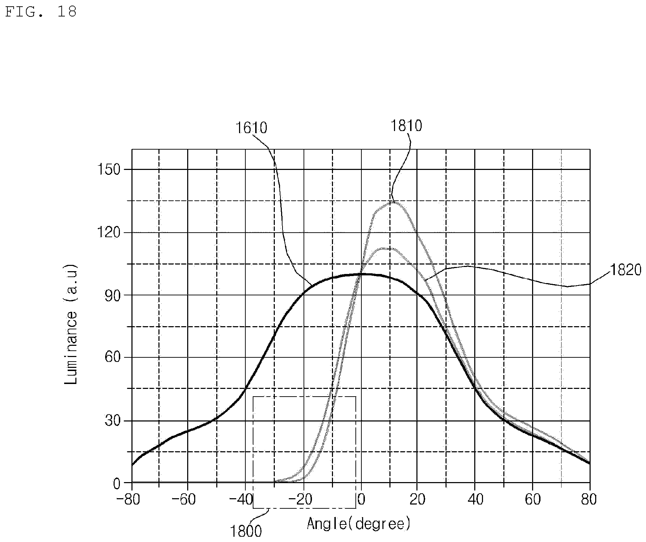

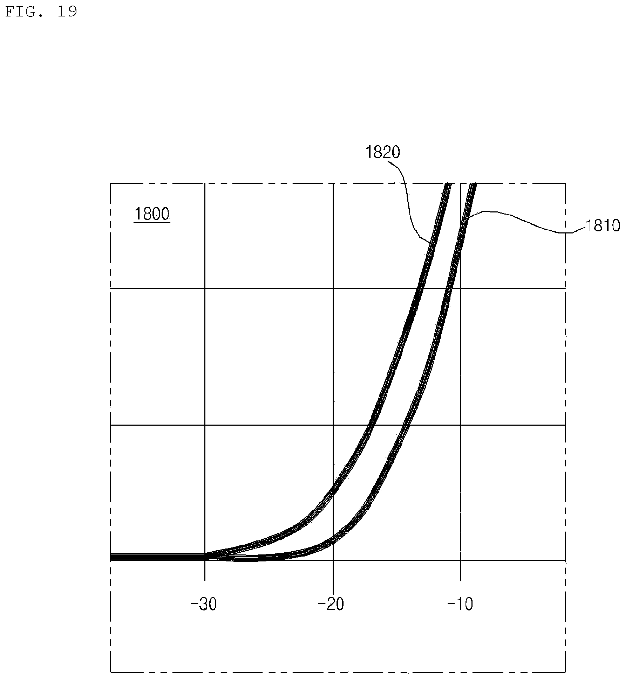

Referring to FIGS. 18 and 19, when the voltage difference between electrodes is a first voltage (e.g., 2.43V) (1810), if the angle between a user and one area of the display panel 810 is less than -23°, the luminance of the screen that the user watches through one area of the display panel 810 may be minimal. On the other hand, when the voltage difference between the electrodes is a first voltage (e.g., 2.35V) (1820), if the angle between a user and one area of the display panel 810 is less than -28°, the luminance of the screen that the user watches through one area of the display panel 810 may be minimal.

That is, the vehicle display device 251 may change the viewing angle by adjusting the voltage difference between the electrodes of the plurality of substrates. In addition, as the voltage difference between the electrodes of the plurality of substrates increases, the viewing angle of the display panel 810 may decrease.

The vehicle display device 251 may adjust the viewing angle of the display panel 810, based on the position of a user (hereinafter, referred to as a driver) located in the driver's seat. For example, the vehicle display device 251 may set the voltage difference between electrodes to 2.35 V, when the angle between a driver and one area of the display panel 810 is -28°. At this time, if the angle between the driver and one area of the display panel 810 is -23° as the driver moves to the right, the vehicle display device 251 may change the voltage difference between the electrodes to 2.43V. Thus, even if a driver's position changes, it is possible to block the driver from watching the image output through one area of the display panel 810.

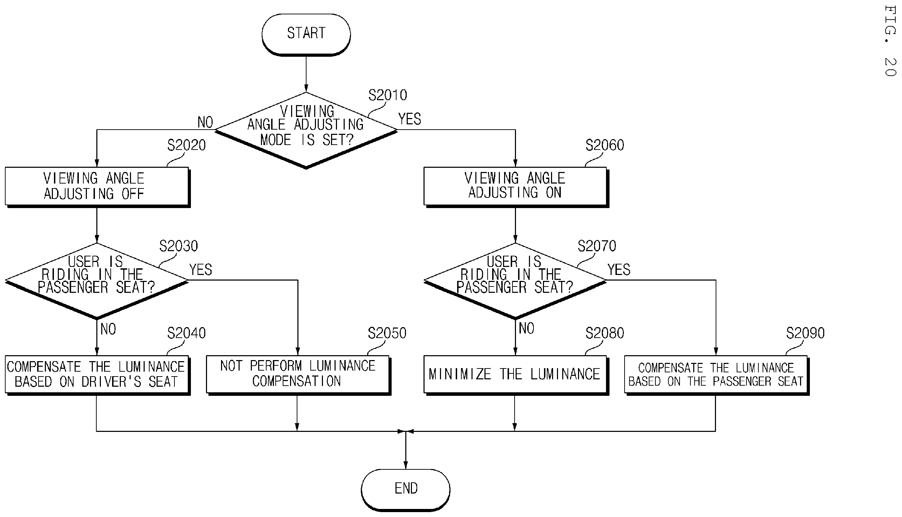

FIG. 20 is a flowchart of a method of operating a vehicle display device according to an embodiment of the present disclosure. Hereinafter, it can be understood that at least some of the operations performed by the vehicle display device 251 is performed by the controller 170 and/or the processor 270.

Referring to FIG. 20, the vehicle display device 251 may determine whether a certain mode for adjusting the viewing angle is set, at operation S2010. Hereinafter, one area of the display panel 810 where the viewing angle is adjusted when a certain mode is set may be referred to as a restricted area.

According to one embodiment, the vehicle display device 251 may set a certain mode, based on whether a condition (hereinafter, referred to as a first condition) related to driving of the vehicle 100 is met. Here, the first condition may correspond to a condition related to safety when driving the vehicle 100.

The vehicle display device 251 may determine whether the first condition is satisfied, based on at least one of the input received through the input unit 210, the state of a transmission, the speed of the vehicle 100, the setting of the autonomous driving mode, the use of a restricted area of the display panel 810 in which the viewing angle is adjusted when a certain mode is set, the type of image output through the display panel 810, and the user's gaze. For example, the vehicle display device 251 may determine that the first condition is satisfied, when a user input for setting a certain mode for adjusting the viewing angle of the restricted area is received through the input unit 210. For example, the vehicle display device 251 may determine that the first condition is satisfied if the speed of the vehicle 100 is greater than or equal to a preset speed of 10 kilometers per hour, and the first condition is not satisfied if the speed of the vehicle 100 is less than the preset speed of 10 kilometers per hour. For example, the vehicle display device 251 may determine that it corresponds to a first mode when autonomous driving mode is set, and the first condition is not satisfied when manual mode is set. For example, when a user input for terminating image output through a restricted area is received through the input unit 210, the vehicle display device 251 may determine that the first condition is not satisfied. For example, the vehicle display device 251 may determine that the first condition is not satisfied, when only driving-related content (e.g., instrument panel, navigation information) is output through the display panel 810.

According to one embodiment, the vehicle display device 251 may perform the determination for the first condition, when the state of transmission is drive (D), reverse (R), or neutral (N), and stop the determination for the first condition in the case of parking (P). According to one embodiment, data corresponding to the eyes of a user located in the driver's seat may be acquired through the internal camera 220 provided in the vehicle 100. At this time, the vehicle display device 251 may stop the determination for the first condition, when it is determined that the driver's gaze is directed forward, based on driver's gaze information.

According to one embodiment, the vehicle display device 251 may set a certain mode, based on whether a privacy-related condition (hereinafter, referred to as a second condition) is satisfied. Here, a second condition may include at least one of a condition related to the driver's privacy and a condition related to the passenger's privacy. For example, when content corresponding to the passenger seat is output through the display panel 810, the vehicle display device 251 may determine that it corresponds to a condition related to the privacy of the passenger. At this time, the content corresponding to the passenger seat may include content transmitted from the passenger's mobile device to the vehicle 100, content preset to correspond to the passenger seat, etc.

Meanwhile, according to one embodiment, the vehicle display device 251 may perform determination for the second condition, depending on whether a passenger is located in the passenger seat. For example, data corresponding to the passenger seat may be acquired through the internal camera 220 provided in the vehicle 100. At this time, the vehicle display device 251 may perform determination for the second condition, based on the passenger's occupation in the passenger seat. Meanwhile, the vehicle display device 251 may stop determination for the second condition, based on the fact that the passenger is not located in the passenger seat.

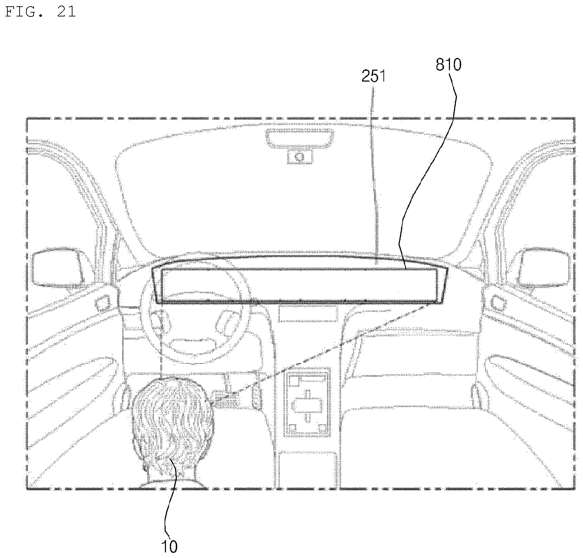

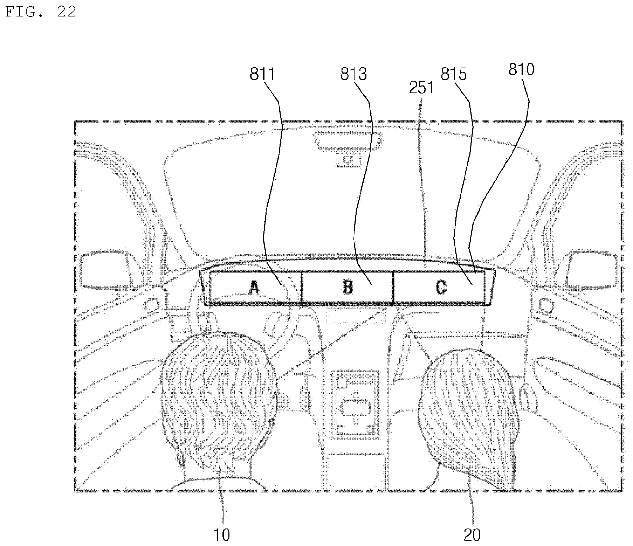

Referring to FIGS. 21 and 22, a display panel 810 corresponding to the instrument panel may be disposed in front of the driver 10 and/or the user 20 (hereinafter, referred to as a first passenger) located in the passenger seat. The driver 10 may gaze at the entire area of the display panel 810.

The display panel 810 may include a first area 811 corresponding to the driver 10, a second area 813 corresponding to the driver 10 and the first passenger 20, and/or a third area 815 corresponding to the first passenger 20. In this disclosure, it is explained as an example that the display panel 810 is composed of three areas (811, 813, and 815), but not limited thereto.

The vehicle display device 251 may output an image through at least one area of the display panel 810. For example, the vehicle display device 251 may output an instrument panel screen including driving speed, driving distance, etc. through the first area 811. For example, the vehicle display device 251 may output a control screen for controlling devices in the vehicle 100 such as a lamp device and an air conditioning device, a screen containing navigation information, etc. through the second area 813. For example, the vehicle display device 251 may output image content such as movies and games through the third area 815.

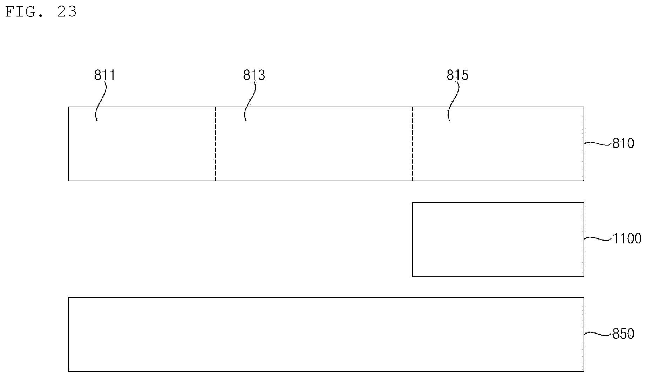

Referring to FIGS. 23 to 25, the viewing angle adjustment panel 1100 may be disposed to correspond to at least a portion of the plurality of areas of the display panel 810.

Referring to FIG. 23, the viewing angle adjustment panel 1100 may be disposed to correspond to the third area 815 of the display panel 810. When the arrangement of the liquid crystal included in the viewing angle adjustment panel 1100 is changed, the viewing angle of at least a portion of the third area 815 may be adjusted. For example, the vehicle display device 251 may adjust the viewing angle for the entire third area 815, when a certain mode is set. At this time, the restricted area may correspond to the entire third area 815.

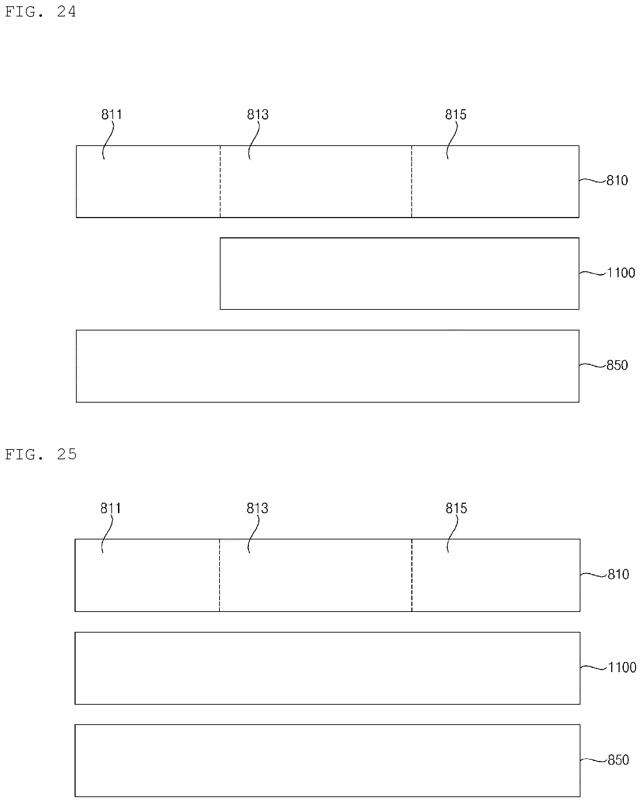

Referring to FIG. 24, the viewing angle adjustment panel 1100 may be disposed to correspond to the second area 813 and the third area 815 of the display panel 810. When the arrangement of the liquid crystal included in the viewing angle adjustment panel 1100 is changed, the viewing angle for at least a portion of the second area 813 and the third area 815 may be adjusted. For example, when a certain mode is set, the vehicle display device 251 may adjust the viewing angle for the third area 815 among the second area 813 and the third area 815. At this time, the restricted area may only correspond to the third area 815 among the second area 813 and the third area 815.

Referring to FIG. 25, the viewing angle adjustment panel 1100 may be disposed to correspond to the first area 811, the second area 813, and the third area 815 of the display panel 810. If the arrangement of the liquid crystal included in the viewing angle adjustment panel 1100 disposed to correspond to the first area 811 is changed, light emitted toward the passenger seat through the first area 811 may be blocked. If the arrangement of the liquid crystal included in the viewing angle adjustment panel 1100 disposed to correspond to the second area 813 and the third area 813 is changed, light emitted toward the driver's seat side through at least a portion of the second area 813 and the third area 813 may be blocked.

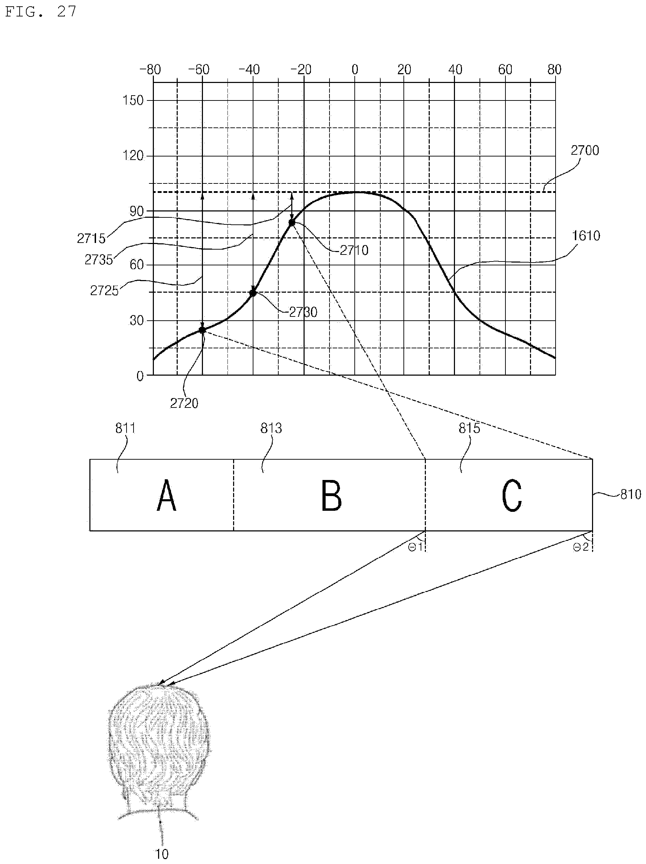

Hereinafter, in FIGS. 27 to 37, it is explained as an example that when a certain mode is set, the third area 815 corresponding to the first passenger 20 among the display panel 810 corresponds to a restricted area.

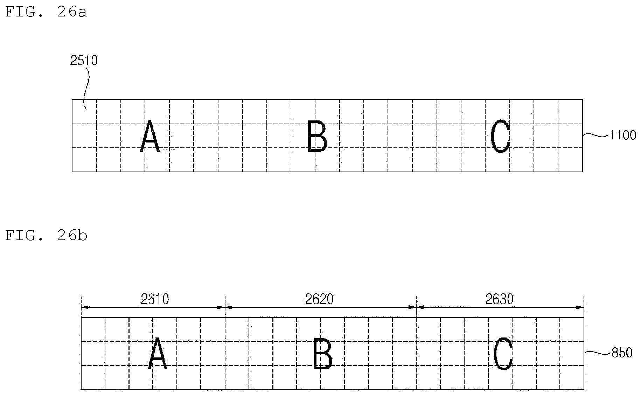

Referring to FIG. 26A, the viewing angle adjustment panel 1100 may include a plurality of subunits 2510 that independently control the arrangement of liquid crystal. The plurality of subunits 2510 may be disposed side by side in the area where the viewing angle adjustment panel 1100 is disposed. The plurality of subunits 2510 may be disposed to correspond to each area of the display panel 810.

The vehicle display device 251 may apply a certain voltage to the subunit 2510 so that the arrangement of the liquid crystal included in the subunit 2510 is changed. At this time, as the voltage applied to the subunit 2510 increases, the voltage difference between the electrodes of the plurality of substrates included in the subunit 2510 may increase. For example, when the third area 815 corresponds to a restricted area, the vehicle display device 251 may apply a certain voltage to the subunit 2510 corresponding to the third area 815 so that the arrangement of the liquid crystal included in the subunit 2510 corresponding to the third area 815 is changed. For example, when the second area 813 and the third area 815 correspond to a restricted area, the vehicle display device 251 may apply a first voltage to the subunit 2510 corresponding to the second area 813, and may apply a second voltage lower than the first voltage to the subunit 2510 corresponding to the third area 815.

Meanwhile, referring to FIG. 26B, a plurality of blocks included in the backlight unit 850 may be disposed to correspond to each area of the display panel 810.

The vehicle display device 251 may adjust the intensity of light output from each of the plurality of blocks included in the backlight unit 850. For example, the backlight unit 850 may include a first block 2610 corresponding to the first area 811, a second block 2620 corresponding to the second area 813, and a third block 2630 corresponding to the third area 815. At this time, when the third area 815 corresponds to a restricted area, the vehicle display device 251 may adjust the intensity of light output from at least a portion of the third block 2630 according to a certain compensation value.

According to one embodiment, the vehicle display device 251 may adjust the intensity of light output from the backlight unit 850, based on the illuminance outside the vehicle and/or the illuminance inside the vehicle (hereinafter, referred to as ambient illuminance). For example, the vehicle display device 251 may increase the intensity of light output from the backlight unit 850, based on the ambient illuminance exceeding a preset illuminance. At this time, the vehicle display device 251 may increase the intensity of light output from the backlight unit 850 in proportion to the difference between the ambient illuminance and the preset illuminance.

Referring again to FIG. 20, at operation S2020, the vehicle display device 251 may turn off the function of adjusting the viewing angle through the viewing angle adjustment panel 1100, in a state where a certain mode is canceled. For example, the vehicle display device 251 may set the voltage difference between the electrodes of the plurality of substrates to a minimum value of 0V. At this time, a user riding in the driver's seat of the vehicle 100 may watch the image output through the restricted area.

The vehicle display device 251 may determine whether the first passenger 20 is riding in the passenger seat, at operation S2030. For example, the vehicle display device 251 may determine whether the first passenger 20 is occupying the passenger seat, based on vehicle interior image acquired through the internal camera 220 and/or biometric information acquired through the biometric detection unit 230.

The vehicle display device 251 may compensate for the luminance of the image output through the display panel 810 based on the driver's seat, when the first passenger 20 is not riding in the passenger seat, at operation S2040. For example, the vehicle display device 251 may adjust the intensity of light output from a block corresponding to the third area 815 among a plurality of blocks included in the backlight unit 850, thereby increasing the luminance of the image output through the third area 815. For example, the vehicle display device 251 may adjust the intensity of the light output from a block corresponding to the second area 813 among a plurality of blocks included in the backlight unit 850, thereby reducing the luminance of the image output through the second area 813.

Meanwhile, the vehicle display device 251 may not perform compensation for the luminance of the image output through the display panel 810, when the first passenger 20 is riding in the passenger seat, at operation S2050.

Referring to FIG. 27, when the first passenger 20 is not riding in the passenger seat, the vehicle display device 251 may compensate for the luminance of the image output through the display panel 810 based on the driver's seat, based on the luminance level 1610 when a certain mode is not set.

The angle between the driver 10 and the third area 815 may correspond to an angle θ1 (hereinafter, a first left angle) formed between the driver's seat and the leftmost position of the third area 815 to an angle θ2 (hereinafter, a first right angle) formed between the driver's seat and the rightmost position of the third area 815.

The luminance level 2710 corresponding to the first left angle θ1 and the luminance level 2720 corresponding to the first right angle θ2 may be lower than the luminance level 2700 (hereinafter, a front luminance level) when a user faces the third area 815 from the front. Therefore, when the driver 10 located in the driver's seat looks at the third area 815, he or she watches a darker image compared to when he or she faces the third area 815 from the front. Therefore, according to one embodiment, the vehicle display device 251 may increase the intensity of light output from the block of the backlight unit 850 corresponding to the third area 815, thereby increasing the luminance of the image output through the third area 815.

Meanwhile, according to the luminance level 1610 when a certain mode is not set, the luminance level of the screen that the driver 10 watches through the third area 815 may gradually decrease along a direction away from the driver's seat. That is, the brightness of the screen watched by the driver 10 may decrease as it moves from the leftmost position to the rightmost position of the third area 815. Accordingly, the vehicle display device 251 may determine a compensation value for each of the plurality of areas forming the third area 815.

According to one embodiment, the vehicle display device 251 may determine a compensation value for the plurality of areas forming the third area 815, based on the difference between a preset reference luminance level and a luminance level 1610 when a certain mode is not set. At this time, the reference luminance level may increase in proportion to the increase in surrounding illuminance. In the present disclosure, it is explained that the front luminance level 2700 is set as a reference luminance level, but it is not limited thereto. For example, the compensation value for the leftmost position of the third area 815 may correspond to the difference 2715 between the front luminance level 2700 and the luminance level 2710 corresponding to the first left angle θ1. For example, the compensation value for the rightmost position of the third area 815 may correspond to the difference 2725 between the front luminance level 2700 and the luminance level 2720 corresponding to the first right angle θ2. At this time, the compensation value 2715, 2725, 2735 determined for the plurality of areas forming the third area 815 may increase along the direction away from the driver's seat.

The vehicle display device 251 may compensate for the luminance of the image output through the third area 815, based on the compensation value determined for the plurality of areas forming the third area 815. For example, the vehicle display device 251 may increase the light intensity corresponding to the leftmost position of the third area 815, 2710 according to the difference 2715 between the front luminance level 2700 and the luminance level 2710 corresponding to the first left angle θ1. In addition, the vehicle display device 251 may increase the light intensity corresponding to the rightmost position of the third area 815, according to the difference 2725 between the front luminance level 2700 and the luminance level 2720 corresponding to the first right angle θ2.

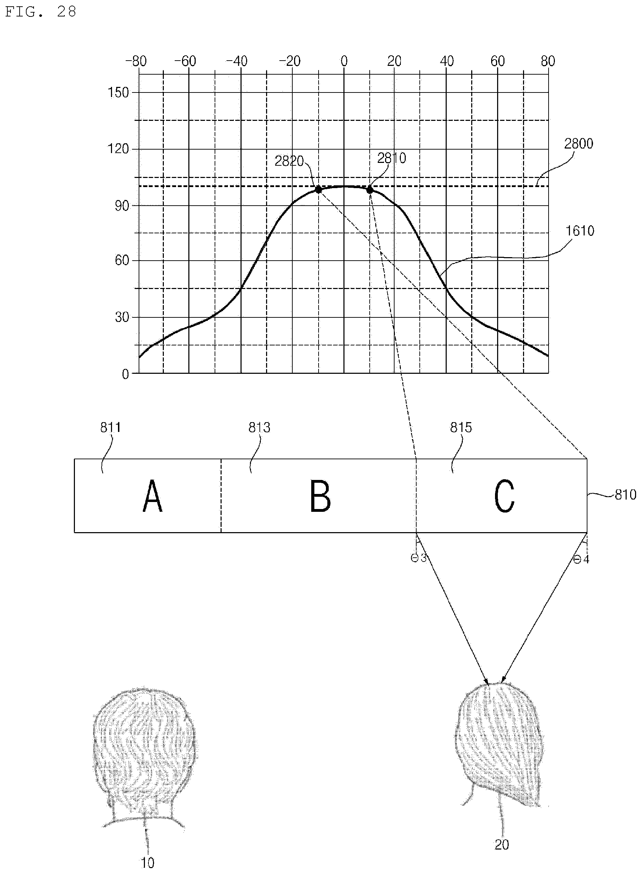

Referring to FIG. 28, when the first passenger 20 is riding in the passenger seat, the angle between the first passenger 20 and the third area 815 may correspond to an angle Θ3 (hereinafter, the second left angle) formed between the passenger seat and the leftmost position of the third area 815 to an angle θ4 (hereinafter, the second right angle) formed between the passenger seat and the rightmost position of the third area 815.

The luminance level 2810 corresponding to the second left angle Θ3 and the luminance level 2820 corresponding to the second right angle Θ4 may be close to the front luminance level 2800. That is, without compensation for the luminance of the image output through the display panel 810, the first passenger 20 located in the passenger seat may watch the image of uniform brightness through the third area 815.

Referring again to FIG. 20, at operation S2060, the vehicle display device 251 may turn on the function of adjusting the viewing angle through the viewing angle adjustment panel 1100, in a state in which a certain mode is set. For example, the vehicle display device 251 may set the voltage difference between the electrodes of the plurality of substrates to a preset 2.4V. At this time, the light emitted through the restricted area may be blocked in the direction toward the driver 10 by the viewing angle adjustment panel 1100.

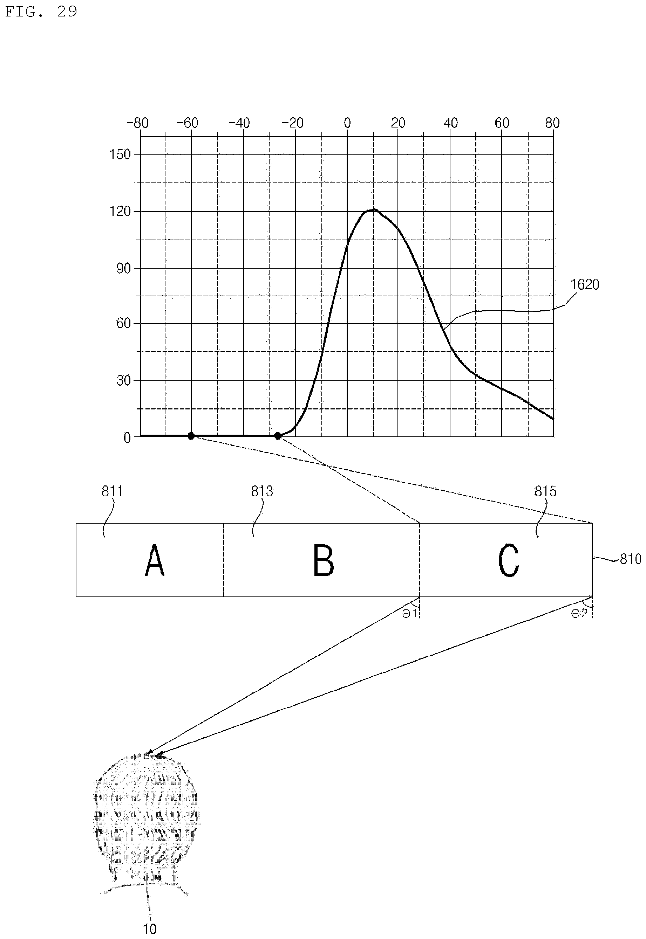

Referring to FIG. 29, the luminance level 2910 corresponding to the first left angle θ1 and the luminance level 2920 corresponding to the first right angle θ2 may correspond to a preset minimum value of 0. That is, the light emitted through the third area 815 may be blocked in the direction toward the driver 10. Accordingly, the driver 10 riding in the driver's seat of the vehicle 100 may not be able to watch the image output through the third area 815 which is a restricted area.

Referring again to FIG. 20, the vehicle display device 251 may determine whether the first passenger 20 is riding in the passenger seat, at operation S2070.

The vehicle display device 251 may minimize the luminance of the image output through the restricted area, when the first passenger 20 is not riding in the passenger seat, at operation S2080. For example, the vehicle display device 251 may stop outputting images through the restricted area, when a certain mode is set in a state in which the first passenger 20 is not riding in the passenger seat.

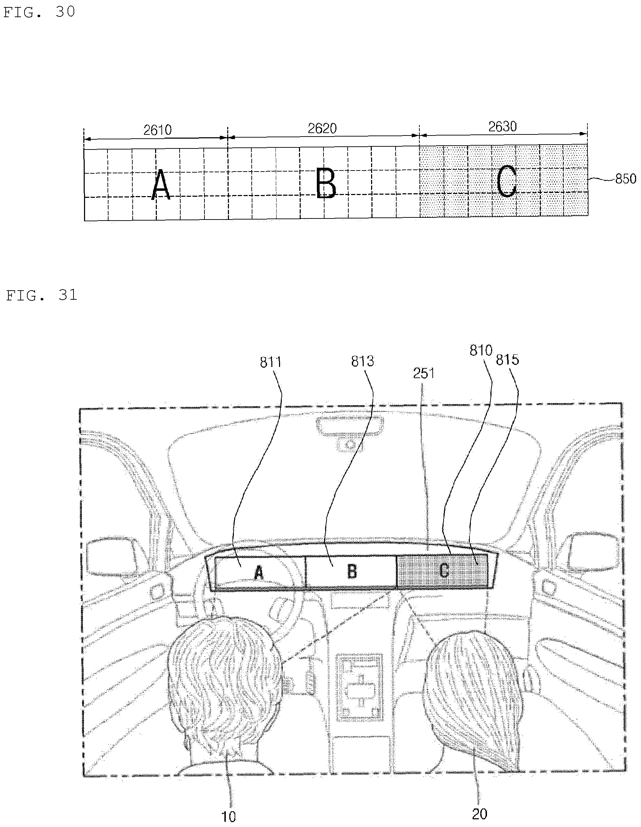

Referring to FIG. 30, the vehicle display device 251 may stop emitting light from the third block 2630 corresponding to the third area 815 among the blocks of the backlight unit 850, when minimizing the luminance of the image output through the restricted area. According to one embodiment, the vehicle display device 251 may stop supplying power to at least one area of the viewing angle adjustment panel 1100 corresponding to the third area 815, in response to stopping the emission of light from the third block 2630. Through this, the power consumption of the vehicle display device 251 may be reduced.

Referring again to FIG. 20, at operation S2090, the vehicle display device 251 may compensate for the luminance of the image output through the display panel 810 based on the passenger seat, when the first passenger 20 is riding in the passenger seat. For example, the vehicle display device 251 may adjust the intensity of light output from a block corresponding to the third area 815 among the plurality of blocks included in the backlight unit 850, thereby increasing the luminance of the image output through at least a portion of the third area 815.

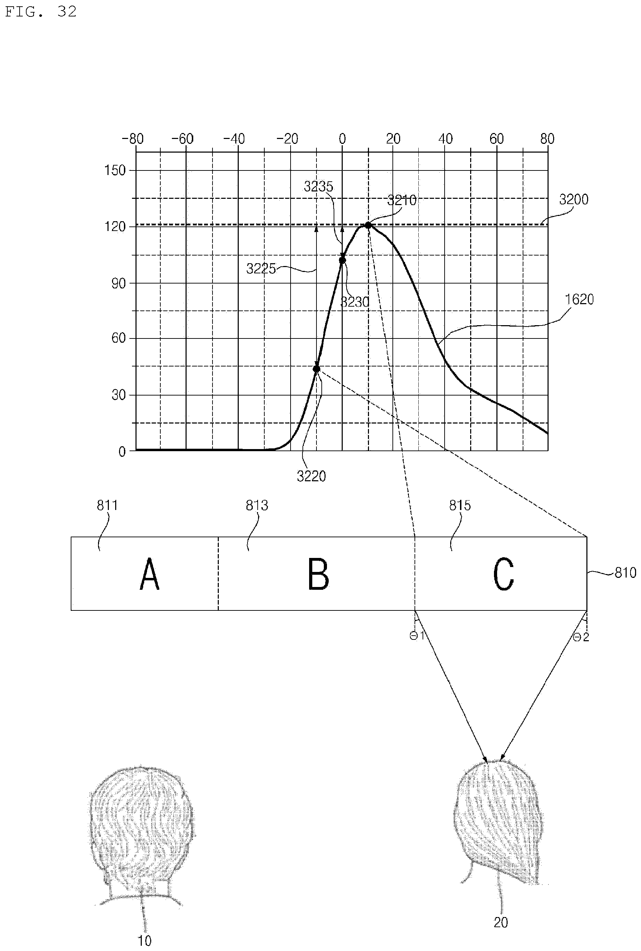

Referring to FIGS. 31 and 32, when a certain mode is set in a state where the first passenger 20 is riding in the passenger seat, as the light emitted through the third area 815 is blocked in the direction toward the driver 10, the driver 10 may not be able to watch the image output through the third area 815 which is the restricted area. Meanwhile, the vehicle display device 251 may compensate for the luminance of the image output through the display panel 810 based on the passenger seat, based on the luminance level 1620 when a certain mode is set.

According to the luminance level 1620 when a certain mode is set, the luminance level 3210 corresponding to the second left angle Θ3 may be higher than the luminance level 3220 corresponding to the second right angle Θ4. In addition, the luminance level 3220 corresponding to the second right angle Θ4 may be lower than the luminance level 2230 when the first passenger 20 faces the third area 815 from the front. That is, the luminance level of a screen that the first passenger 20 watches through the third area 815 may gradually decrease along the direction away from the driver's seat. In addition, the luminance of the screen watched by the first passenger 20 may decrease as it moves from the leftmost position to the rightmost position of the third area 815.

According to one embodiment, the vehicle display device 251 may determine a compensation value for the plurality of areas forming the third area 815, based on the difference between a preset reference luminance level and the luminance level 1620 when a certain mode is set. In the present disclosure, it is explained that the highest luminance level among the luminance levels 1620 when a certain mode is set is set to the reference luminance level 3200, but is not limited thereto. For example, since the luminance level 3210 corresponding to the second left angle Θ3 corresponds to the reference luminance level 3200, the compensation value for the leftmost position of the third area 815 may be 0. For example, the compensation value for the rightmost position of the third area 815 may correspond to the difference 3225 between the reference luminance level 3200 and the luminance level 3220 corresponding to the second right angle Θ4. At this time, the compensation value 3225, 3235 determined for the plurality of areas forming the third area 815 may increase along the direction away from the driver's seat.

The vehicle display device 251 may compensate for the luminance of the image output through the third area 815, based on the compensation value determined for the plurality of areas forming the third area 815. For example, the vehicle display device 251 may increase the intensity of light corresponding to the rightmost position of the third area 815, according to the difference 3225 between the luminance level 3210 corresponding to the second left angle Θ3 and the luminance level 3220 corresponding to the second right angle Θ4.

According to one embodiment, the vehicle display device 251 may determine the compensation value for the plurality of areas forming the third area 815, based on the position of the first passenger 20.

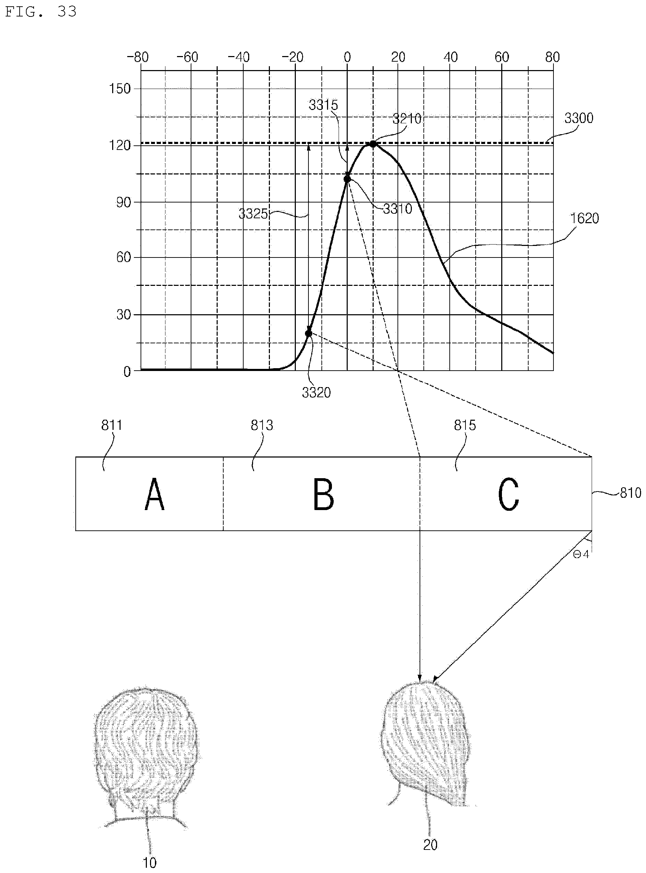

Referring to FIG. 33, the first passenger 20 may move to the left from a certain position corresponding to the passenger seat. For example, the first passenger 20 may be positioned to face the leftmost position of the third area 815 from the front. That is, the angle between the first passenger 20 and the leftmost position of the third area 815 may be 0°.

At this time, the luminance level 3310 corresponding to the second left angle θ3 and the luminance level 3320 corresponding to the second right angle θ4 may be lower than the luminance level 3210, 3220 when the first passenger 20 is located in a certain position corresponding to the passenger seat. That is, as the first passenger 20 moves to the left, the luminance of the screen that the first passenger 20 watches through the third area 815 may decrease.

The vehicle display device 251 may determine the compensation value for the leftmost position of the third area 815, according to the difference 3315 between the luminance level 3310 corresponding to the second left angle Θ3 and the reference luminance level 3300. The vehicle display device 251 may determine the compensation value for the rightmost position of the third area 815, according to the difference 3325 between the luminance level 3320 corresponding to the second right angle Θ4 and the reference luminance level 3300. At this time, the compensation value for the leftmost position of the third area 815 and the compensation value for the rightmost position of the third area 815 may increase compared to the compensation value when the first passenger 20 is located in a certain position corresponding to the passenger seat. In addition, based on a decrease in the distance between the first passenger 20 and the driver's seat, the difference between the compensation values corresponding to both lefttmost and rightmost positions of the third area 815 may increase.

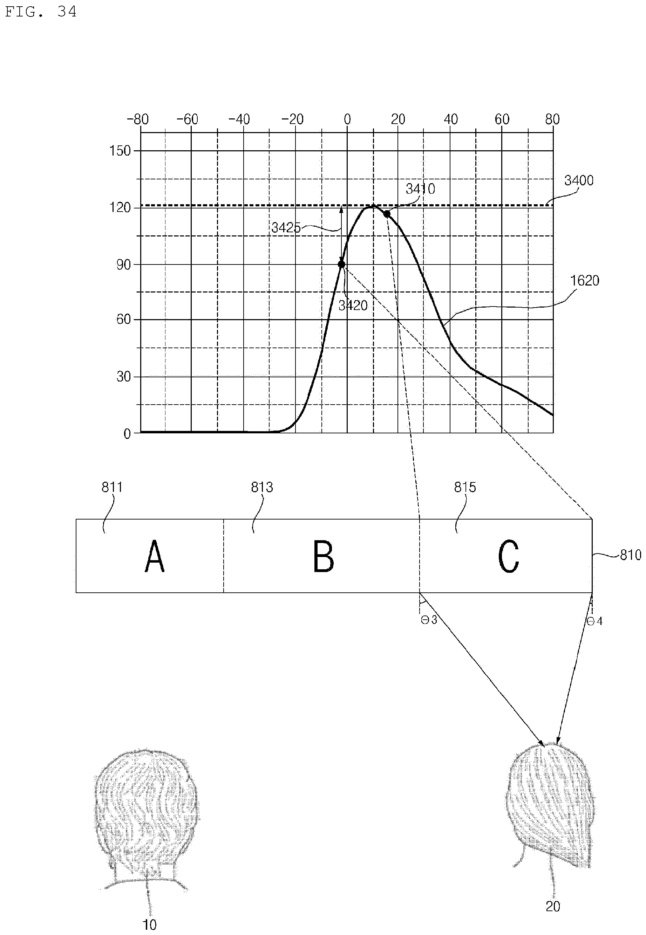

Meanwhile, referring to FIG. 34, the first passenger 20 may move to the right from a certain position corresponding to the passenger seat. At this time, the luminance level 3410 corresponding to the second left angle θ3 may be lower than the luminance level 3210 when the first passenger 20 is located in a certain position corresponding to the passenger seat. Meanwhile, the luminance level 3420 corresponding to the second right angle Θ4 may be increased to the luminance level 3220 when the first passenger 20 is located in a certain position corresponding to the passenger seat. That is, when the first passenger 20 moves to the right, the luminance of a portion of the screen that the first passenger 20 watches through the third area 815 may increase, and the luminance of other portion of the screen may decrease.

The vehicle display device 251 may determine the compensation value for the leftmost position of the third area 815, according to the difference 3415 between the luminance level 3410 corresponding to the second left angle Θ3 and the reference luminance level 3400. The vehicle display device 251 may determine the compensation value for the rightmost position of the third area 815, according to the difference 3425 between the luminance level 3420 corresponding to the second right angle Θ4 and the reference luminance level 3400. At this time, the compensation value for the leftmost position of the third area 815 may be reduced compared to the compensation value when the first passenger 20 is located at a certain position corresponding to the passenger seat. Meanwhile, the compensation value for the rightmost position of the third area 815 may increase compared to the compensation value when the first passenger 20 is located at a certain position corresponding to the passenger seat.

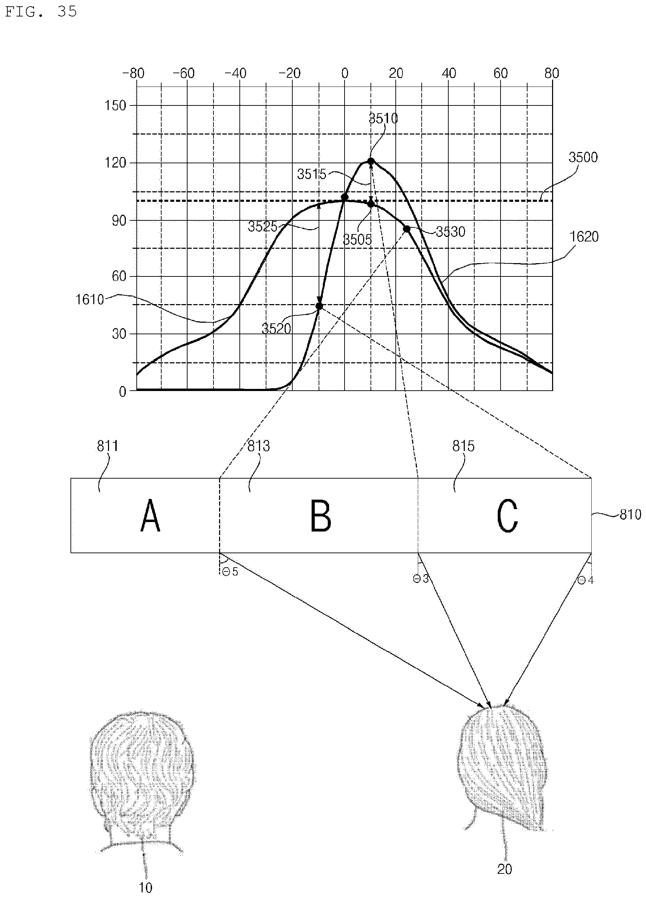

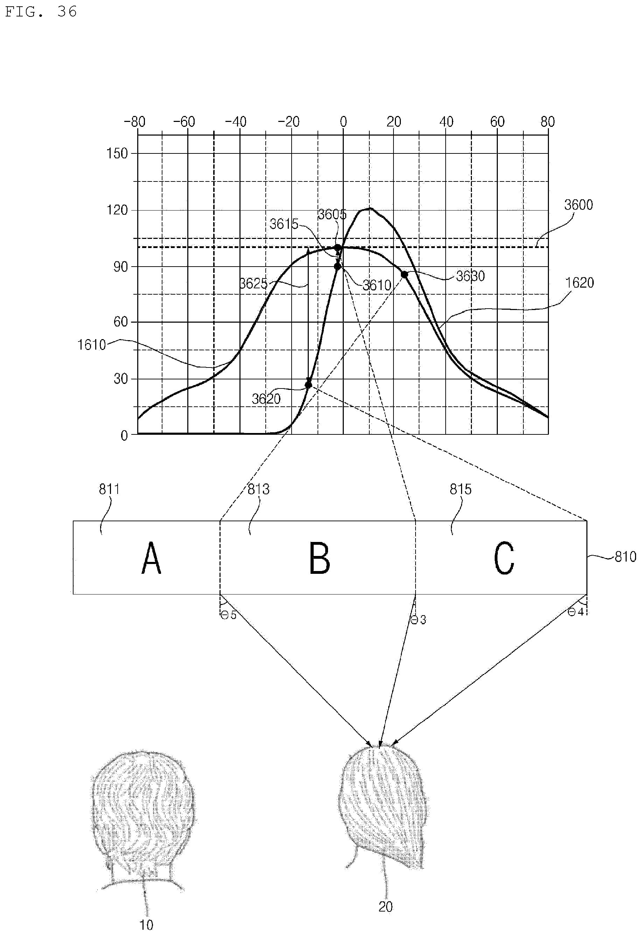

Referring to FIGS. 35 and 36, the viewing angle adjustment panel 1100 may be disposed to correspond to the second area 813 and the third area 815 of the display panel 810. At this time, the vehicle display device 251 may determine the compensation value for the plurality of areas forming the third area 815, based on the luminance of the screen that the first passenger 20 watches through the second area 813.

Referring to FIG. 35, the boundary between the second area 813 and the third area 815 may be located in the left side which is the direction toward the driver's seat based on the passenger seat. When the boundary between the second area 813 and the third area 815 is located in the left side based on the passenger seat, the second left angle θ3, which is the angle formed between the first passenger 20 and the leftmost position of the third area 813, may exceed 0°.

The luminance of the screen that the first passenger 20 watches through the second area 813 may correspond to the luminance level 1610 when a certain mode is not set. The luminance of the screen that the first passenger 20 watches through the third area 815 may correspond to the luminance level 1620 when a certain mode is set. At this time, the luminance level 3505 corresponding to the rightmost position of the second area 813 may be lower than the luminance level 3510 corresponding to the second left angle θ3. That is, the first passenger 20 may recognize the screen watched through the rightmost position of the second area 813 as darker than the screen watched by the first passenger 20 through the leftmost position of the third area 815. In addition, the first passenger 20 may recognize that the second area 813 and the third area 815 are separated and disposed as a different display, due to a difference in brightness that occurs based on the boundary between the second area 813 and the third area 815.

The vehicle display device 251 may determine the compensation value for the plurality of areas forming the third area 815, based on the difference between the preset reference luminance level and the luminance level 1620 when a certain mode is set. At this time, the reference luminance level 3500 may be the luminance level 3505 corresponding to the rightmost position of the second area 813. For example, the compensation value for the leftmost position of the third area 815 may correspond to the difference 3515 between the reference luminance level 3500 and the luminance level 3510 corresponding to the second left angle Θ3. For example, the compensation value for the rightmost position of the third area 815 may correspond to the difference 3525 between the reference luminance level 3500 and the luminance level 3520 corresponding to the second right angle θ4. At this time, the compensation value determined for the plurality of areas forming the third area 815 may increase along the direction away from the driver's seat.

The intensity of light corresponding to one area located in the left side of the third area 815, based on the passenger seat, may be reduced according to the compensation value. The intensity of light corresponding to other area located in the right side of the third area 815, based on the passenger seat, may increase according to the compensation value.

Meanwhile, referring to FIG. 36, the boundary between the second area 813 and the third area 815 may be located in the right side which is a direction away from the driver's seat based on the passenger seat. When the boundary between the second area 813 and the third area 815 is located in the right side based on the passenger seat, the second left angle Θ3, which is the angle formed between the first passenger 20 and the leftmost position of the third area 813, may be less than 0°.

At this time, the luminance level 3605 corresponding to the rightmost position of the second area 813 may be lower than the luminance level 3610 corresponding to the second left angle Θ3. That is, the first passenger 20 may recognize the screen watched through the rightmost position of the second area 813 as brighter than the screen watched by the first passenger 20 through the leftmost position of the third area 815.

The vehicle display device 251 may determine the compensation value for the plurality of areas forming the third area 815, based on the difference between the preset reference luminance level and the luminance level 1620 when a certain mode is set. At this time, the reference luminance level 3600 may be the luminance level 3605 corresponding to the rightmost position of the second area 813. For example, the compensation value for the leftmost position of the third area 815 may correspond to the difference 3615 between the reference luminance level 3600 and the luminance level 3610 corresponding to the second left angle Θ3. For example, the compensation value for the rightmost position of the third area 815 may correspond to the difference 3625 between the reference luminance level 3600 and the luminance level 3620 corresponding to the second right angle θ4. At this time, the compensation value determined for the plurality of areas forming the third area 815 may increase along the direction away from the driver's seat. In addition, the vehicle display device 251 may increase the intensity of light corresponding to the third area 815, according to the compensation value determined for the plurality of areas forming the third area 815.

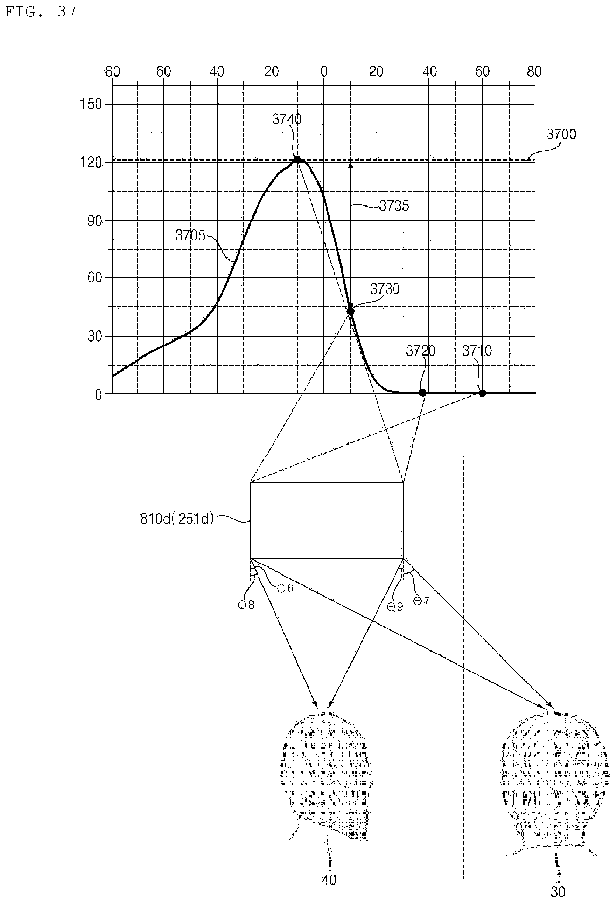

Referring to FIG. 37, the vehicle display device 251 according to an embodiment of the present disclosure may block the image output through the display panel 810 from being exposed to the outside of the vehicle 100, by using the viewing angle adjustment panel 1100. In this disclosure, it is explained as an example that the screen output through the display panel 810d (hereinafter, referred to as a rear seat panel) disposed in one area 251d of the passenger seat 110FR, but is not limited thereto.

When a rear seat panel 810d is disposed in one area 251d of the passenger seat 110FR, the viewing angle adjustment panel 1100 may be disposed in one area 251d of the passenger seat 110FR corresponding to the position of the rear seat panel 810d. The viewing angle adjustment panel 1100 may be disposed to correspond to the entire area of the rear seat panel 810d.

The viewing angle adjustment panel 1100 may operate to block at least a portion of the light emitted to the right based on the overall length direction. For example, the controller 170 and/or processor 370 may determine, through the object detection device 300, whether other vehicle OB11, the pedestrian OB12, the two-wheeled vehicle OB13, or the like approaches the right side of the vehicle 100 where the rear seat is located. At this time, the vehicle display device 251 may adjust the viewing angle through the viewing angle adjustment panel 1100 disposed in one area 251d of the passenger seat 110FR, when it is determined that other vehicle OB11, the pedestrian OB12, two-wheeled vehicle OB13, or the like approaches the right side of the vehicle 100.

The luminance levels 3710 and 3720 respectively corresponding to the angles θ6 and θ7 formed between the pedestrian 30 located outside the vehicle 100 and both lefttmost and rightmost positions of the rear seat panel 810d may correspond to a preset minimum value 0. That is, the light emitted through the rear seat panel 810d may be blocked in the direction toward the pedestrian 30. Accordingly, the pedestrian 30 located outside the vehicle 100 may not be able to watch the image output through the rear seat panel 810d. Meanwhile, the vehicle display device 251 may compensate for the luminance of the image output through the rear seat panel 810d based on the rear seat, based on the luminance level 3705 when a certain mode is set.

According to the luminance level 3705 when a certain mode is set, the luminance level 3730 corresponding to the angle θ8 (hereinafter, a third left angle) formed between the user 40 (hereinafter, the second passenger) located in the rear seat and the leftmost position of the rear seat panel 810d may be lower than the luminance level 3740 corresponding to the angle θ9 (hereinafter, a third right angle) formed between the second passenger 40 and the rightmost position of the rear seat panel 810d. In addition, as it moves from the leftmost position to the rightmost position of the rear seat panel 810d, the brightness of the screen watched by the second passenger 40 may increase.

The vehicle display device 251 may determine the compensation value for the rear seat panel 810d, based on the difference between a preset reference luminance level and the luminance level 3705 when a certain mode is set. In the present disclosure, it is explained that the highest luminance level among the luminance levels 3705 when a certain mode is set is set as a reference luminance level 3700, but is not limited thereto. For example, the compensation value for the leftmost position of the rear seat panel 810d may correspond to the difference 3735 between the reference luminance level 3700 and the luminance level 3730 corresponding to the third left angle θ8. For example, since the luminance level 3740 corresponding to the third right angle θ9 corresponds to the reference luminance level 3700, the compensation value for the rightmost position of the rear seat panel 810d may be 0. At this time, the compensation value determined for the rear seat panel 810d may decrease along the right direction.

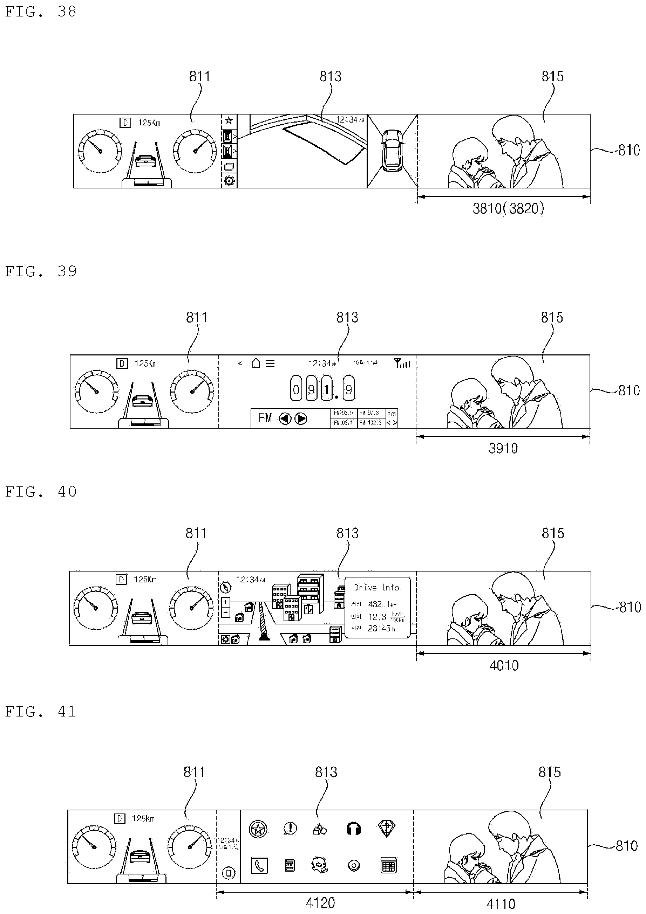

FIGS. 38 to 49 are diagrams for explaining a setting of restricted area, according to an embodiment of the present disclosure.

According to one embodiment, when the first condition is satisfied, the vehicle display device 251 may determine a restricted area (hereinafter, a first restricted area) related to driving safety among the display panel 810.

If the first condition is satisfied, the vehicle display device 251 may determine one area of the display panel 810 adjacent to the passenger seat as a first restricted area. For example, one area of the display panel 810 adjacent to the passenger seat may include at least the third area 815. Meanwhile, the area of the first restricted area may increase as the speed of the vehicle 100 increases. For example, if the speed of the vehicle 100 is less than a first speed (e.g., 60 km/h), the third area 815 may be included in the first restricted area. For example, when the speed of the vehicle 100 is the first speed (e.g., 60 km/h) or higher, but less than a second speed (e.g., 80 km/h), the third area 815 and a portion of the second area 813 adjacent to the third area 815 may be included in the first restricted area. For example, when the speed of the vehicle 100 is a third speed (e.g., 100 km/h) or higher, the second area 813 and the third area 815 may be included in the first restricted area. That is, as the speed of the vehicle 100 increases, the area of the second area 813 included in the first restricted area may increase in the direction toward the driver's seat. At this time, as the speed of the vehicle 100 changes, the area of the second area 813 included in the first restricted area may gradually change.

The vehicle display device 251 may determine the first restricted area, based on the type of content output through the display panel 810. For example, the vehicle display device 251 may determine the first restricted area among remaining area of the display panel 810 excluding an area from which driving-related content (e.g., instrument panel, navigation information) is output, based on the driving-related content being output through the display panel 810. For example, the vehicle display device 251 may determine the area of display panel 810 from which the image content is output as the first restricted area, based on the image content such as a movie, game, and OTT service being output through the display panel 810.

According to one embodiment, the vehicle display device 251 may determine a restricted area (hereinafter, a second restricted area) related to privacy among the display panel 810, when the second condition is satisfied. For example, when a message transmitted from a mobile device of the passenger 20 to the vehicle 100 is output through the second area 813 of the display panel 810, the second area 813 may be determined as the second restricted area. For example, when image content previously set as exclusive content for the passenger 20 is output through the third area 815 of the display panel 810, the third area 815 may be determined as the second restricted area.

Referring to FIG. 38, an instrument panel screen may be output through the first area 811 of the display panel 810. In addition, an around view monitor screen may be output through the camera 310, through the second area 813 of the display panel 810. At this time, since the instrument panel screen and the around view monitor screen are driving-related content, the vehicle display device 251 may determine the first restricted area among the remaining area excluding the first area 811 and the second area 813.

Meanwhile, movie-related image content may be output through the third area 815 of the display panel 810. At this time, the vehicle display device 251 may determine the third area 815 of display panel 810 from which movie-related content corresponding to image content is output as the first restricted area 3810. Meanwhile, when movie-related image content is transmitted from the mobile device of the passenger 20, or is set as exclusive content for the passenger 20, the vehicle display device 251 may determine the third area 815 of the display panel 810 as the second restricted area 3820.

The vehicle display device 251 may apply voltage to the viewing angle adjustment panel 1100 corresponding to the first restricted area 3810. At this time, as the arrangement of the liquid crystal corresponding to the first restricted area 3810 changes, the emission of light from the first restricted area 3810 toward the driver's seat may be restricted. Meanwhile, the vehicle display device 251 may continue to change the arrangement of the liquid crystal corresponding to the second restricted area 3820, even when the driving of the vehicle 100 is terminated. Accordingly, while movie-related image content is output, the emission of light toward the driver's seat from the second restricted area 3820 may continue to be restricted.

Hereinafter, in FIGS. 39 to 48, the first area 811 of the display panel 810 from which the instrument panel screen is output is explained as not being included in the first restricted area and the second restricted area. In addition, the third area 815 of the display panel 810 from which movie-related image content is output may be determined as the first restricted area.

Referring to FIG. 39, radio-related content may be output through the second area 813 of the display panel 810. At this time, since radio-related content does not correspond to driving-related content, at least a portion of the second area 813 may be determined as the first restricted area according to the first condition. For example, when the speed of the vehicle 100 is the first speed (e.g., 60 km/h) or higher, at least a portion of the second area 813 may be included in the first restricted area according to the speed of the vehicle 100.

Referring to FIG. 40, the instrument panel may be output through the first area 811 of the display panel 810. In addition, a navigation screen may be output through the second area 813 of the display panel 810. At this time, since the instrument panel screen and the navigation screen are driving-related content, the vehicle display device 251 may determine the first restricted area from among the remaining area excluding the first area 811 and the second area 813.

Referring to FIG. 41, meanwhile, as a home screen corresponding to the mobile device of the passenger 20 is output through the second area 813 of the display panel 810, the vehicle display device 251 may determine the second area 813 of the display panel 810 as the second restricted area 4120.

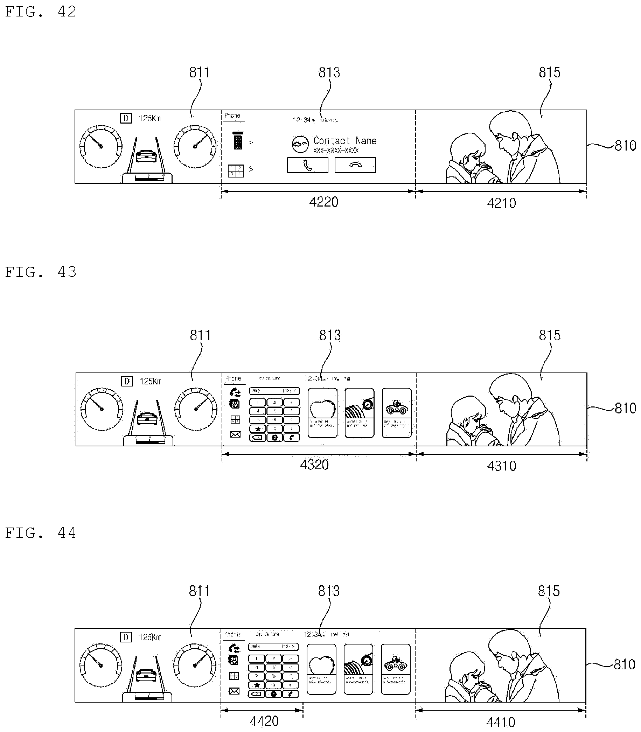

Referring to FIGS. 42 and 43, a content related to call function may be output through the second area 813 of the display panel 810. At this time, when the content related to call function corresponds to a call function through the mobile device of the passenger 20, the second area 813 may be determined as the second restricted area 4220, 4320. Meanwhile, when the content related to call function corresponds to the mobile device of the driver 10, the second area 813 may be determined as the first restricted area according to the first condition. For example, when the speed of the vehicle 100 is the first speed (e.g., 60 km/h) or higher, at least a portion of the second area 813 may be included in the first restricted area according to the speed of the vehicle 100.

Referring to FIG. 44, the content related to call function may be output through the second area 813 of the display panel 810. At this time, when a keypad-related content corresponds to the mobile device of the passenger 20 and a contact-related content corresponds to the mobile device of the driver 10, only one area from which the keypad-related content is output among the second area 813 may be determined as the second restricted area 4420.

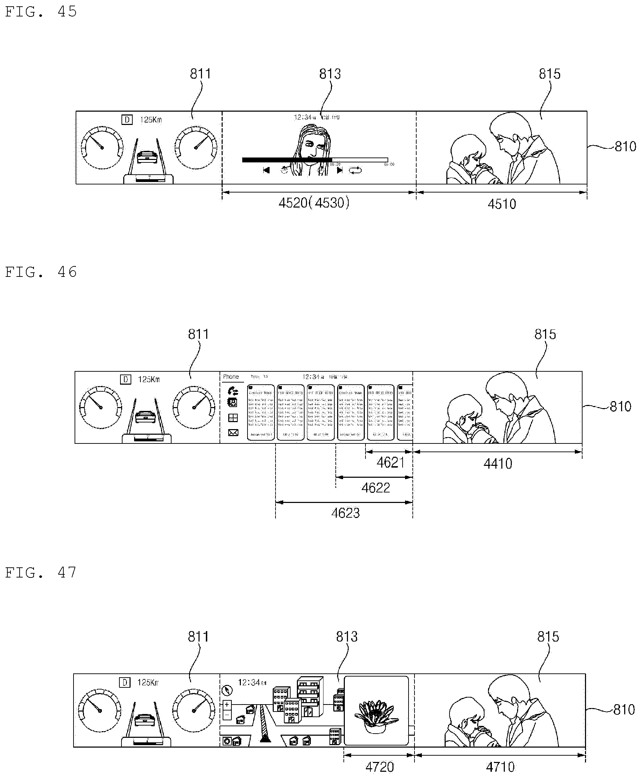

Referring to FIG. 45, real-time OTT service-related content may be output through the second area 813 of the display panel 810.

At this time, the vehicle display device 251 may determine the third area 815 of the display panel 810, from which the OTT service-related content corresponding to image content is output as the first restricted area 4520.

Referring to FIG. 46, text message-related content may be output through the second area 813 of the display panel 810. At this time, when the text message-related content is transmitted from the mobile device of the passenger 20 or is set as exclusive content for the passenger 20, the vehicle display device 251 may determine the second area 813 of the display panel 810 as the second restricted area.

Meanwhile, when the text message-related content corresponds to the mobile device of the driver 10, the second area 813 may be determined as the first restricted area according to the first condition. For example, when the speed of the vehicle 100 is a certain speed (e.g., 80 km/h) or higher, the square measure of the area 4621, 4622, 4623 included in the first restricted area of the second area 813 may increase as the speed of the vehicle 100 increases.

Referring to FIG. 47, a navigation screen may be output through a portion of the second area 813 of the display panel 810. At this time, as the navigation screen is driving-related content, the vehicle display device 251 may determine the first restricted area and/or the second area from among the remaining area excluding a portion from which the navigation screen is output among the second area 813.

Photo-related content may be output through a remaining portion of the second area 813 of the display panel 810. At this time, when the photo-related content is transmitted from the mobile device of the passenger 20 or is preset as exclusive content for the passenger 20, the vehicle display device 251 may determine a remaining portion of the second area 813 as the second restricted area 4720.

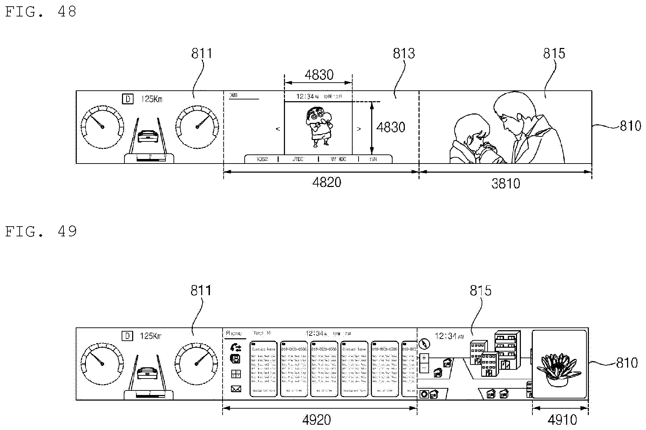

Referring to FIG. 48, digital multimedia broadcasting (DMB)-related content may be output through the second area 813 of the display panel 810. At this time, the vehicle display device 251 may determine the second area 813 of display panel 810, from which DMB-related content corresponding to image content is output, as the first restricted area 4820. Meanwhile, the vehicle display device 251 may determine only a portion corresponding to image among the DMB-related content among the second area 813 as the first restricted area 4830.

Referring to FIG. 49, a navigation screen may be output through a portion of the third area 815 of the display panel 810. At this time, as the navigation screen is driving-related content, the vehicle display device 251 may determine the first restricted area and/or the second area among the remaining area excluding a portion from which the navigation screen is output among the third area 815.

The photo-related content may be output through a remaining portion among the third area 815 of the display panel 810. At this time, when the photo-related content is transmitted from the mobile device of the passenger 20 or is set as exclusive content for the passenger 20, the vehicle display device 251 may determine the remaining portion of the third area 815 as the second restricted area 4910.

Meanwhile, text message-related content may be output through the second area 813 of the display panel 810. At this time, when the text message-related content is transmitted from the mobile device of the passenger 20 or is set as exclusive content for the passenger 20, the vehicle display device 251 may determine the second area 813 of the display panel 810 as the second restricted area 4920.

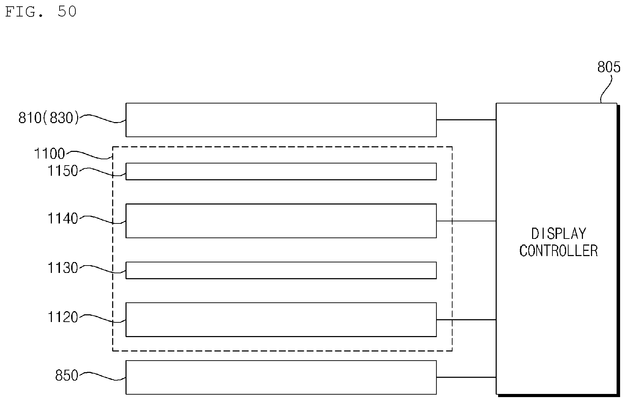

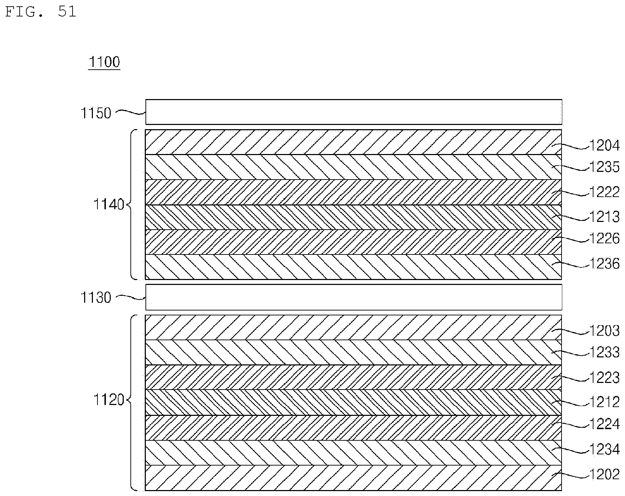

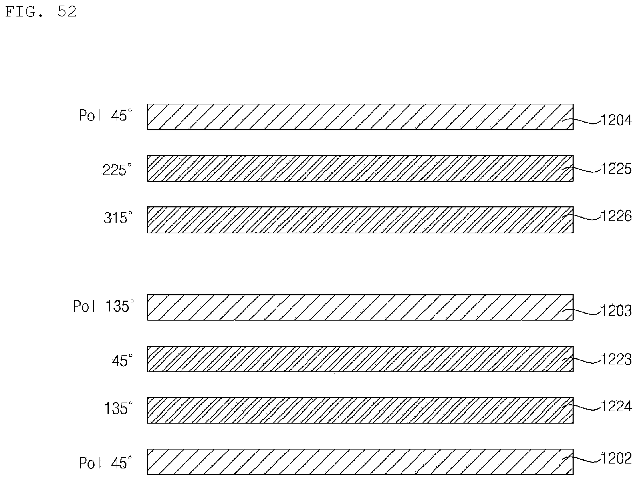

FIGS. 50 to 52 are diagrams for explaining a vehicle display device according to an embodiment of the present disclosure. Detailed explanations will be omitted for content that overlaps with the content explained in FIGS. 11 to 19.

Referring to FIGS. 50 to 52, the viewing angle adjustment panel 1100 may include a second adjustment unit 1120 and a third adjustment unit 1140.

The third adjustment unit 1140 may correspond to the first adjustment unit 1110 rotated by 180° based on a rotation axis parallel to the vertical direction in which the components of the viewing angle adjustment panel 1100 are stacked.

The third adjustment unit 1140 may include a third liquid crystal layer 1213 made of liquid crystal. The third adjustment unit 1140 may include a third upper alignment layer 1225 disposed in the upper side of the third liquid crystal layer 1213 and a third lower alignment layer 1226 disposed in the lower side of the third liquid crystal layer 1213. The direction in which the liquid crystal included in the third liquid crystal layer 1213 faces may be defined by the characteristics of the liquid crystal and the pattern of a plurality of third lower alignment layers 1225 and 1226.

The direction in which the liquid crystals are arranged by the third upper alignment layer 1225 and the direction in which the liquid crystals are arranged by the third lower alignment layer 1226 may be perpendicular to each other. The direction in which the liquid crystals are arranged by the third upper alignment layer 1225 may be opposite to the direction in which the liquid crystals are arranged by the first upper alignment layer 1221. The direction in which the liquid crystals are arranged by the third lower alignment layer 1226 may be opposite to the direction in which the liquid crystals are arranged by the first lower alignment layer 1222.

The third adjustment unit 1140 may include a third upper substrate 1235 disposed in the upper side of the third liquid crystal layer 1213 and a third lower substrate 1236 disposed in the lower side of the third liquid crystal layer 1213. The arrangement of the liquid crystal included in the third liquid crystal layer 1213 may change depending on the voltage difference between the electrodes of the plurality of third substrates 1235 and 1236.

As the voltage difference between the electrode of the third upper substrate 1235 and the electrode of the third lower substrate 1236 increases, the degree to which the arrangement of the liquid crystal included in the third liquid crystal layer 1213 is changed may increase. At this time, as the degree to which the arrangement of the liquid crystal included in the third liquid crystal layer 1213 is changed, the viewing angle may decrease. For example, as the arrangement of the liquid crystals forming the first liquid crystal layer 1211 of the first adjustment unit 1110 is changed, the emission of light toward the driver's seat may be restricted. For example, as the arrangement of the liquid crystal forming the third liquid crystal layer 1213 of the third adjustment unit 1130 is changed, the emission of light toward the passenger seat may be restricted.

According to one embodiment, the viewing angle adjustment panel 1100 may include a plurality of films 1130 and 1140.

The first film 1130 may be disposed on the upper side of the second adjustment unit 1120. The first film 1130 may be configured to restrict the emission of light for a first angle corresponding to the second adjustment unit 1120. For example, when the emission of light toward the driver's seat is restricted as the arrangement of the liquid crystal forming the second liquid crystal layer 1212 of the second adjustment unit 1120 is changed, the first film 1130 may be configured to restrict the emission of light for a certain angle toward the driver's seat.

The second film 1150 may be disposed on the upper side of the third adjustment unit 1130. The second film 1150 may be configured to restrict the emission of light for a second angle corresponding to the third adjustment unit 1140. For example, when the emission of light toward the passenger seat is restricted as the arrangement of the liquid crystal forming the third liquid crystal layer 1213 of the third adjustment unit 1140 is changed, the second film 1150 may be configured to restrict the emission of light for a certain angle toward the passenger seat.

In the present disclosure, it is described that the viewing angle adjustment panel 1100 includes the third adjustment unit 1140 corresponding to the first adjustment unit 1110, but is not limited thereto.

According to one embodiment, the viewing angle adjustment panel 1100 may include a fourth adjustment unit corresponding to the first adjustment unit 1110 and the second adjustment unit 1120. At this time, the fourth adjustment unit may correspond to the second adjustment unit 1120 rotated by 180° based on a rotation axis parallel to the vertical direction in which the components of the viewing angle adjustment panel 1100 are stacked.

For example, the vehicle display device 251 may restrict the emission of light toward the driver's seat through the first adjustment unit 1110, and may restrict the emission of light toward the passenger seat through the fourth adjustment unit.

According to one embodiment, the vehicle display device 251 may include a plurality of viewing angle adjustment panels. A plurality of viewing angle adjustment panels may be stacked and disposed along the vertical direction. One of the plurality of viewing angle adjustment panels may correspond to the viewing angle adjustment panel 1100 shown in FIGS. 11 to 13. The remaining one of the plurality of viewing angle adjustment panels may correspond to the viewing angle adjustment panel 1100 rotated by 180° based on a rotation axis parallel to the vertical direction. For example, the vehicle display device 251 may restrict the emission of light toward the driver's seat through one of the plurality of viewing angle adjustment panels, and restrict the emission of light toward the passenger seat through the remaining one of the plurality of viewing angle adjustment panels.

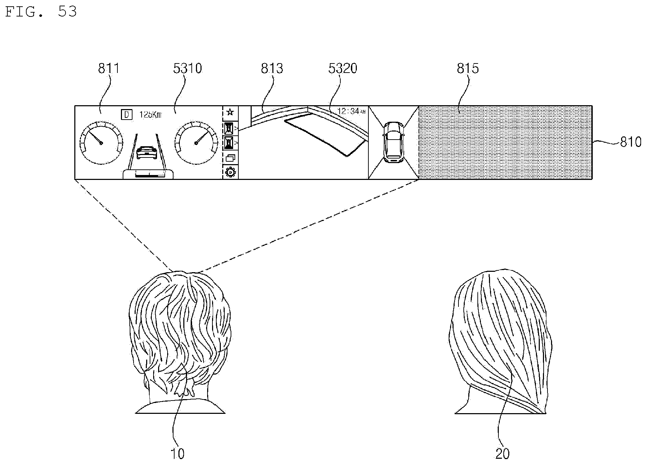

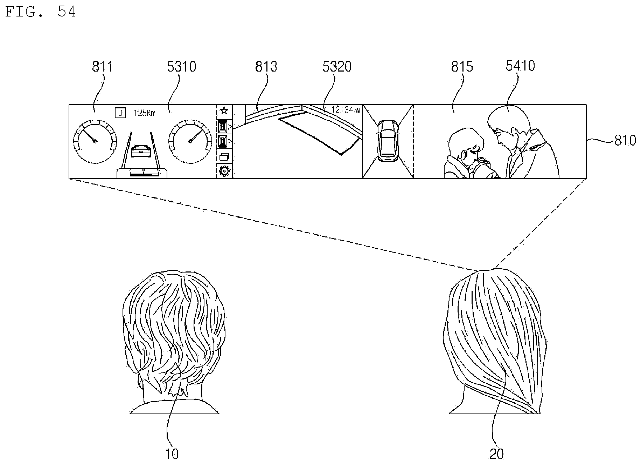

Referring to FIGS. 53 and 54, since each of the instrument panel screen 5310 output through the first area 811 and the around view monitor screen 5320 output through the second area 813 is driving-related content, the vehicle display device 251 may determine the first restricted area from the remaining area excluding the first area 811 and the second area 813.

As the movie-related content 5410 corresponding to image content is output through the third area 815, the vehicle display device 251 may determine the third area 815 as the first restricted area.

The vehicle display device 251 may restrict the light emitted toward the driver's seat from the third area 815 of the display panel 810 determined as the first restricted area. The vehicle display device 251 may apply a voltage to the second upper substrate 1233 and the second lower substrate 1234 disposed in one area of the viewing angle adjustment panel 1100 corresponding to the third area 815 of the display panel 810. At this time, as the arrangement of the liquid crystal of the second liquid crystal layer 1212 corresponding to the third area 815 is changed, the light emitted from the third area 815 toward the driver's seat may be restricted.

Accordingly, the driver 10 may only be able to watch the instrument panel screen 5310 and the around view monitor screen 5320, and may not be able to watch the movie-related content 5410. Meanwhile, the passenger 20 may be able to watch all of the instrument panel screen 5310, the around view monitor screen 5320, and movie-related content 5410.

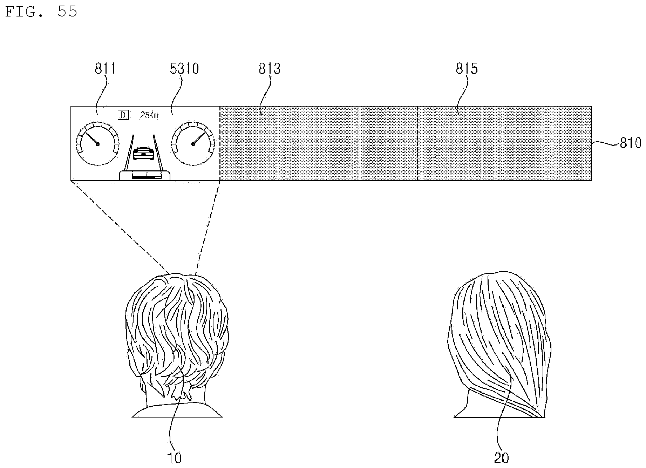

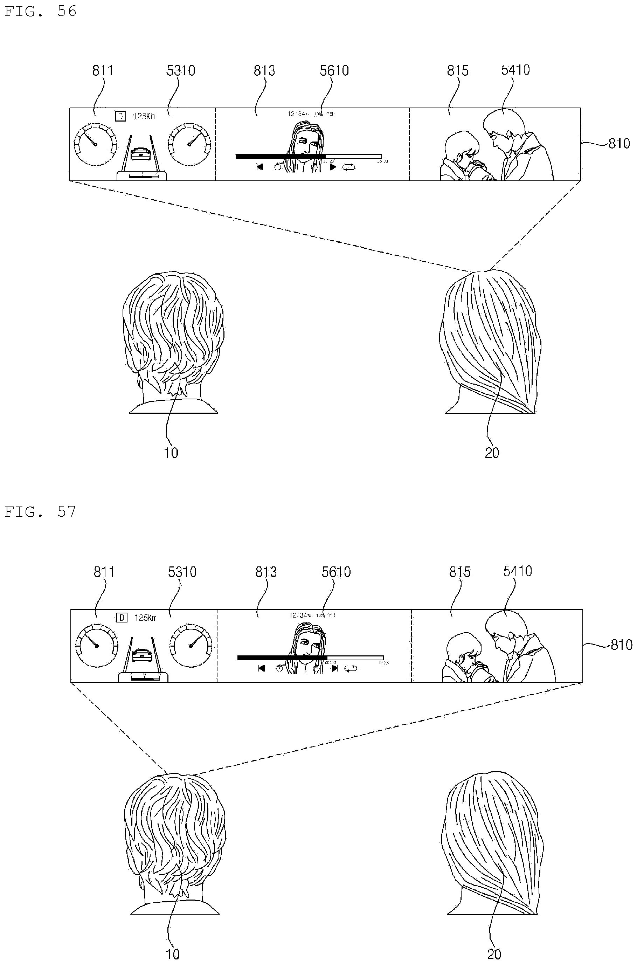

Referring to FIGS. 55 and 56, since the real-time OTT service-related content 5610 output through the second area 813 and the movie-related content 5410 output through the third area 815 are both image content, the vehicle display device 251 may determine the second area 813 and the third area 815 as the first restricted area.

The vehicle display device 251 may restrict the light emitted toward the driver's seat from the second area 813 and the third area 815 of the display panel 810 which are determined as the first restricted area. The vehicle display device 251 may apply a voltage to the second upper substrate 1233 and the second lower substrate 1234 disposed one area of the viewing angle adjustment panel 1100 corresponding to the second area 813 and the third area 815 of the display panel 810. At this time, as the arrangement of the liquid crystal of the second liquid crystal layer 1212 corresponding to the second area 813 and the third area 815 is changed, the light emitted from the second area 813 and the third area 815 toward the driver's seat may be restricted.

Accordingly, the driver 10 may only watch the instrument panel screen 5310, and may not be able to watch real-time OTT service-related content 5610 and movie-related content 5410. Meanwhile, the passenger 20 may be able to watch the instrument panel screen 5310, real-time OTT service-related content 5610, and movie-related content 5410.

Meanwhile, referring to FIG. 57, when the speed of the vehicle 100 is less than a preset speed limit (e.g., 10 km/h), when autonomous driving mode is set, when the state of the transmission is parking P, etc., the first condition related to driving of the vehicle 100 may not be satisfied. At this time, the vehicle display device 251 may stop applying voltage to the second upper substrate 1233 and the second lower substrate 1234 disposed in one area of the viewing angle adjustment panel 1100. Therefore, like the passenger 20, the driver 10 may be able to watch the instrument panel screen 5310, real-time OTT service-related content 5610, and movie-related content 5410.

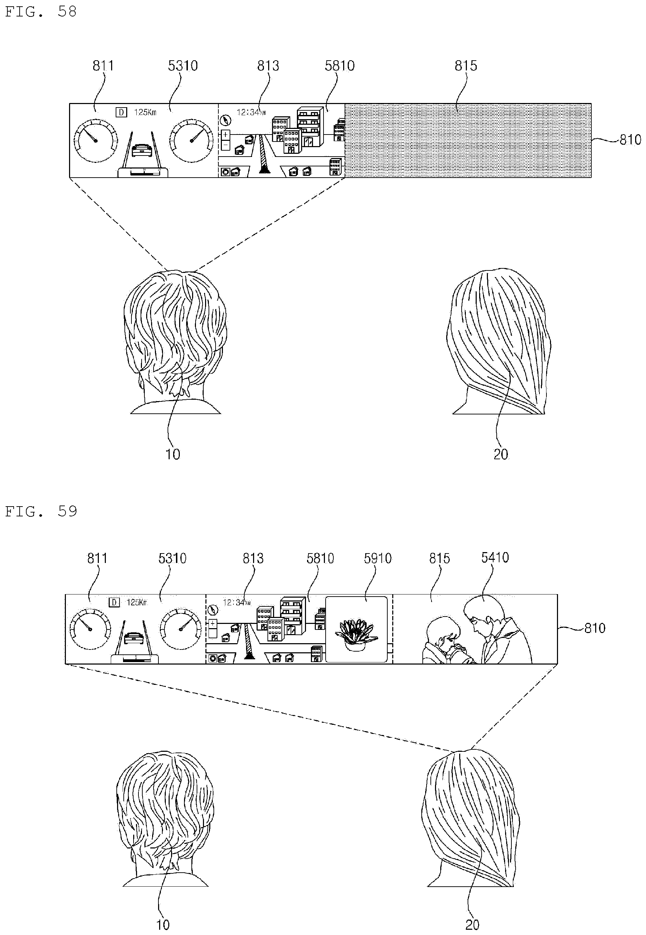

Referring to FIGS. 58 and 59, the navigation screen 5810 and the photo-related content 5910 may be output through the second area 813 of the display panel 810. Since each of the instrument panel screen 5310 output through the first area 811 and the navigation screen 5810 output through the second area 813 is driving-related content, the vehicle display device 251 may determine the first restricted area from among the first area 811 and the second area 813 excluding one area from which the navigation screen 5810 is output.

When the speed of the vehicle 100 is greater than or equal to a set speed limit (e.g., 10 km/h), the display device 251 may determine the third area 815 from which the movie-related content 5410 is output as the first restricted area. Meanwhile, when the speed of the vehicle 100 is a certain speed (e.g., 60 km/h), the display device 251 may determine the third area 815 and one area of second area 813 from which the photo-related content 5910 is output as the first restricted area. Therefore, when the speed of the vehicle 100 is equal to or higher than a preset speed limit (e.g., 10 km/h) or less than a certain speed (e.g., 60 km/h), the driver 10 may be able to watch the instrument panel screen 5310, the navigation screen 5810, and the photo-related content 5910. In addition, the driver 10 may only be able to watch the instrument panel screen 5310 and the navigation screen 5810, when the speed of the vehicle 100 is equal to or higher than a certain speed (e.g., 60 km/h).

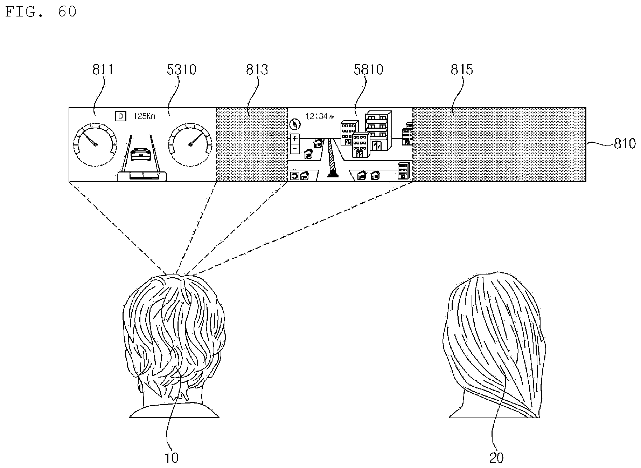

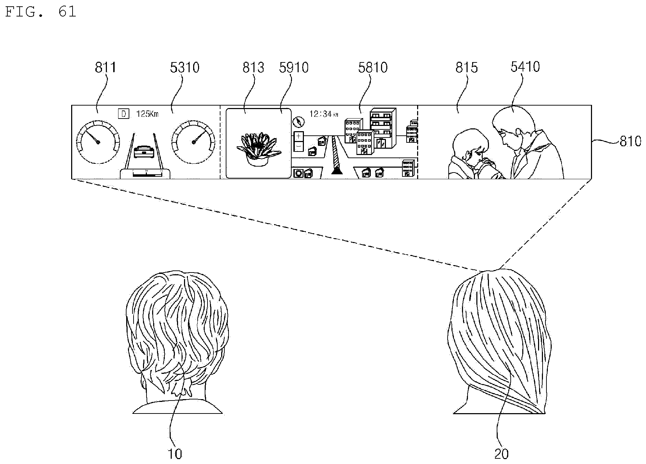

Referring to FIGS. 60 and 61, the navigation screen 5810 and the photo-related content 5910 may be output through the second area 813 of the display panel 810. Since each of the instrument panel screen 5310 output through the first area 811 and the navigation screen 5810 output through the second area 813 is driving-related content, the vehicle display device 251 may determine the first restricted area from among the first area 811 and the second area 813 excluding one area from which the navigation screen 5810 is output.

As the movie-related content 5410 corresponding to image content is output through the third area 815, the vehicle display device 251 may determine the third area 815 as the first restricted area.

Meanwhile, when movie-related image content 5410 and photo-related content 5910 are transmitted from the mobile device of the passenger 20 to the vehicle 100, the vehicle display device 251 may determine the third area 815 and one area of second area 813 from which the photo-related content 5910 is output as the second restricted area. At this time, the third area 815 and one area of second area 813 from which the photo-related content 5910 is output may correspond to the restricted area (hereinafter, a third restricted area) related to the privacy of the passenger seat among the second restricted area.

The vehicle display device 251 may restrict the light emitted toward the driver's seat from the third area 815 of the display panel 810 determined as the first restricted area and the third restricted area. In addition, the vehicle display device 251 may restrict the light emitted toward the driver's seat from the area where the photo-related content 5910 is output among the second area 813 determined as the third restricted area.

Accordingly, while the first condition related to the driving of the vehicle 100 is satisfied, the driver 10 may only watch the instrument panel screen 5310 and the navigation screen 5810, and may not watch the movie-related image content 5410 and the photo-related content 5910. In addition, even when the first condition related to the driving of the vehicle 100 is not satisfied, the driver 10 may not be able to watch the movie-related image content 5410 and the photo-related content 5910. Meanwhile, the passenger 20 may be able to watch all of the instrument panel screen 5310, the photo-related content 5910, the navigation screen 5810, and the movie-related content 5410.

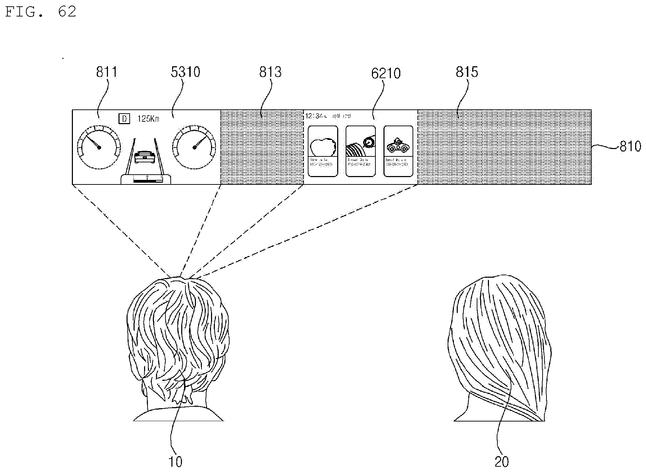

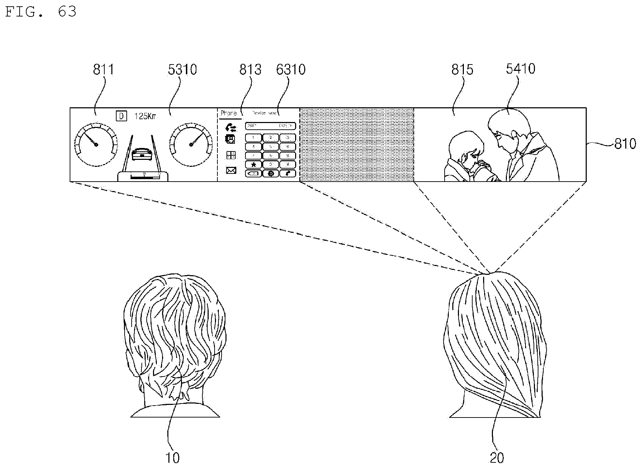

Referring to FIGS. 62 and 63, contact-related content 6210 and keypad-related content 5310 may be output through the second area 813 of the display panel 810. At this time, the contact-related content 6210 may be transmitted from the mobile device of the driver 10 to the vehicle 100. In addition, the keypad-related content 5310 may be set as exclusive content for the passenger 20.

As the movie-related content 5410 corresponding to image content is output through the third area 815, the vehicle display device 251 may determine the third area 815 as the first restricted area.

Meanwhile, when contact-related content 6210 is transmitted from the mobile device of the driver 10 to the vehicle 100, the vehicle display device 251 may determine one area of the second area 813 from which the contact-related content 6210 is output as the second restricted area. At this time, the one area of the second area 813 from which the contact-related content 6210 is output may correspond to a restricted area (hereinafter, a fourth restricted area) related to the privacy of the driver's seat among the second restricted areas. In addition, the area from which the keypad-related content 5310 set as the exclusive content for the passenger 20 is output, among the second area 813, may correspond to the third restricted area among the second restricted area.

The vehicle display device 251 may restrict the light emitted toward the driver's seat from the third area 815 of the display panel 810 determined as the first restricted area. In addition, the vehicle display device 251 may restrict the light emitted toward the driver's seat from the area from which the keypad-related content 5310 is output among the second area 813 determined as the third restricted area.

Meanwhile, the vehicle display device 251 may restrict the light emitted toward the passenger seat from the area from which the contact-related content 6210 is output among the second area 813 determined as the fourth restricted area. The vehicle display device 251 applies a voltage to the third upper substrate 1235 and the third lower substrate 1236 disposed in one area of the viewing angle adjustment panel 1100 corresponding to the area from which the contact-related content 6210 is output. At this time, as the arrangement of the liquid crystal of the third liquid crystal layer 1213 corresponding to the area from which the contact-related content 6210 is output is changed, the light emitted toward the passenger seat from the area from which the contact-related content 6210 is output may be restricted.

Accordingly, while the first condition related to the driving of the vehicle 100 is satisfied, the driver 10 may be able to watch only the instrument panel screen 5310 and the contact-related content 6210, and may not be able to watch the movie-related image content 5410 and the keypad-related content 5310. In addition, the passenger 20 may be able to watch only the instrument panel screen 5310, the keypad-related content 5310, and the movie-related content 5410, and may not be able to watch the contact-related content 6210.

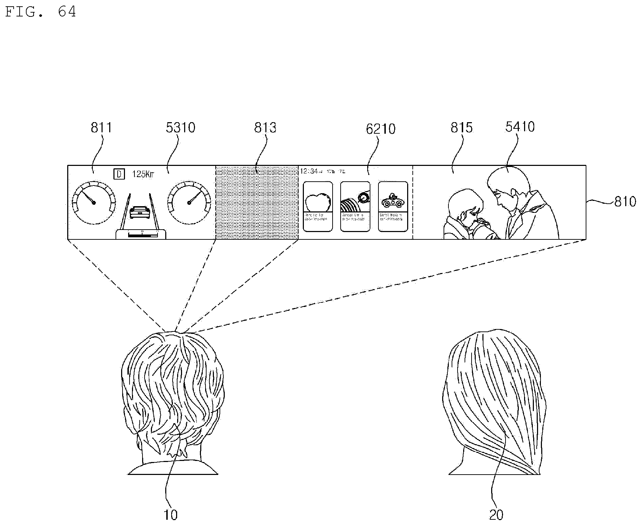

Meanwhile, referring to FIG. 64, when the speed of the vehicle 100 is less than a preset speed limit (e.g., 10 km/h), when autonomous driving mode is set, when the state of the transmission is parking P, etc., the first condition related to driving of the vehicle 100 may not be satisfied. At this time, the vehicle display device 251 may stop applying voltage to the second upper substrate 1233 and the second lower substrate 1234 disposed in one area of the viewing angle adjustment panel 1100. Therefore, like the passenger 20, the driver 10 may also be able to watch the movie-related content 5410.

Meanwhile, even when the first condition related to driving of the vehicle 100 is not satisfied, the driver 10 may not be able to watch the keypad-related content 5310 output through one area of the second area 813.

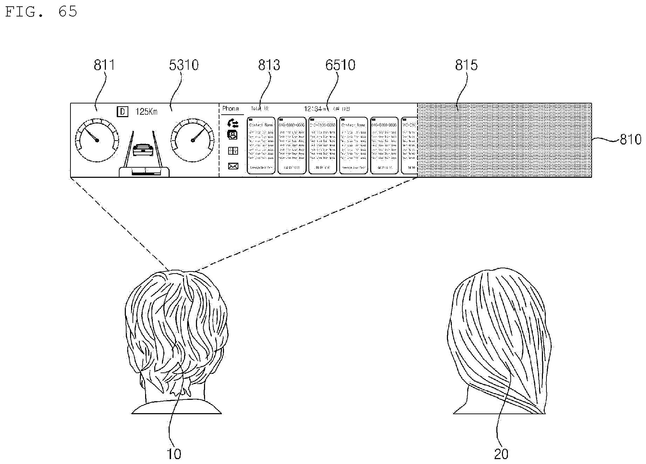

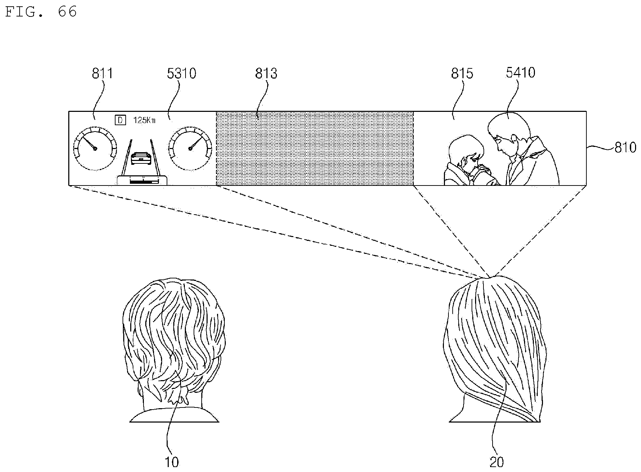

Referring to FIGS. 65 and 66, movie-related content 5410 may be transmitted from the mobile device of the passenger 20 to the vehicle 100, or may be set as exclusive content for the passenger 20. At this time, the third area 815 from which the movie-related content 5410 is output may be determined as the third restricted area among the second restricted area. In addition, text message-related content 6510 may be transmitted from the mobile device of the driver 10 to the vehicle 100, or may be set as exclusive content for the driver 10. At this time, the second area 813 from which the text message-related content 6510 is output may be determined as the fourth restricted area among the second restricted area.

The vehicle display device 251 may restrict the light emitted toward the driver's seat from the third area 815 determined as the third restricted area. In addition, the vehicle display device 251 may restrict the light emitted toward the passenger seat from the second area 813 determined as the fourth restricted area. Accordingly, the driver 10 may be able to watch only the instrument panel screen 5310 and the text message-related content 6510, and may not be able to watch the movie-related image content 5410. In addition, the passenger 20 may be able to watch only the instrument panel screen 5310 and the movie-related content 5410, and may not be able to watch the text message-related content 6510.

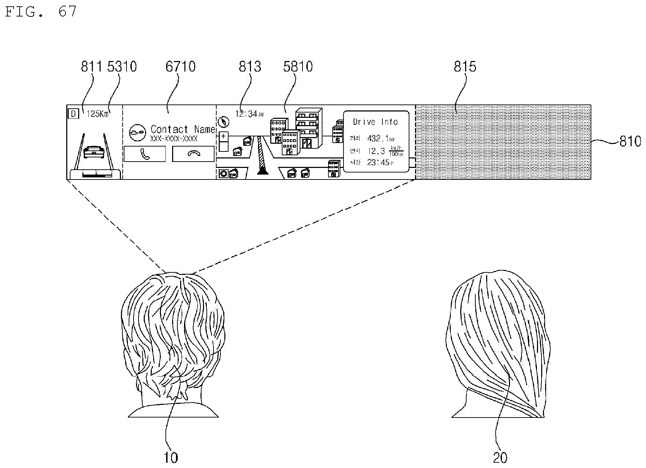

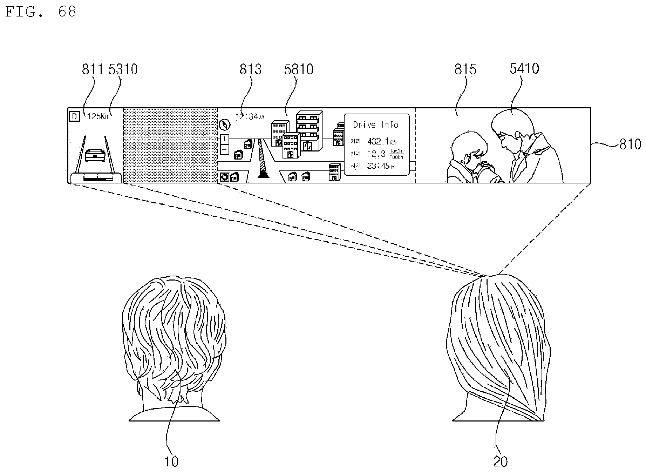

Referring to FIGS. 67 and 68, as movie-related content 5410 corresponding to image content is output through the third area 815, the vehicle display device 251 may determine the third area 815 as the first restricted area. In addition, the call function-related content 6710 may be set as exclusive content for the driver 10. At this time, a portion of first area 811 from which the call function-related content 6710 is output may be determined as the fourth restricted area among the second restricted area.

The vehicle display device 251 may restrict the light emitted toward the driver's seat from the third area 815 determined as the first restricted area. In addition, the vehicle display device 251 may restrict the light emitted toward the passenger seat from a portion of the first area 811, from which the call function-related content 6710 is output, determined as the fourth restricted area.

Accordingly, while the first condition related to driving of the vehicle 100 is satisfied, the driver 10 may be able to watch only the instrument panel screen 5310, the call function-related content 6710, and the navigation screen 5810, and may not be able to watch the movie-related image content 5410. Meanwhile, the passenger 20 may be able to watch only the instrument panel screen 5310, the navigation screen 5810, and the movie-related image content 5410, and may not be able to watch the call function-related content 6710.

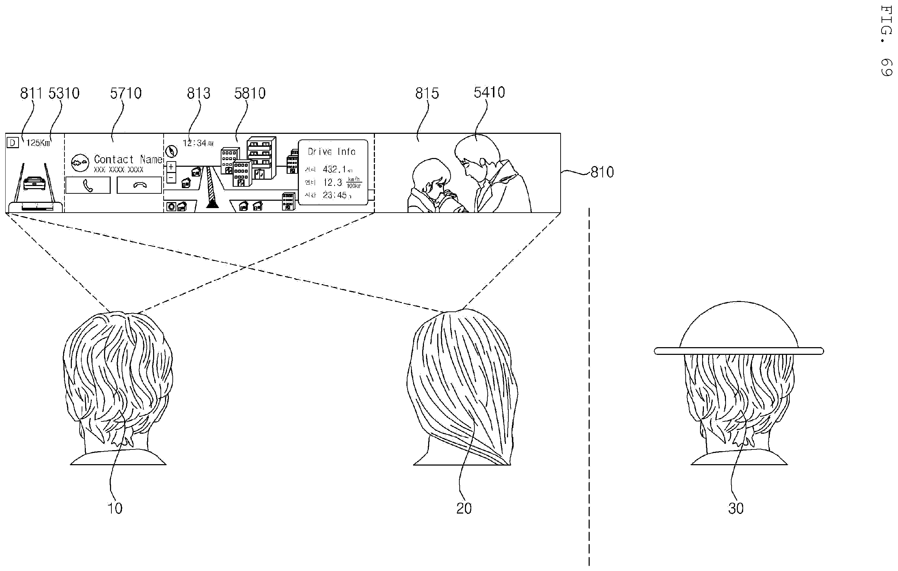

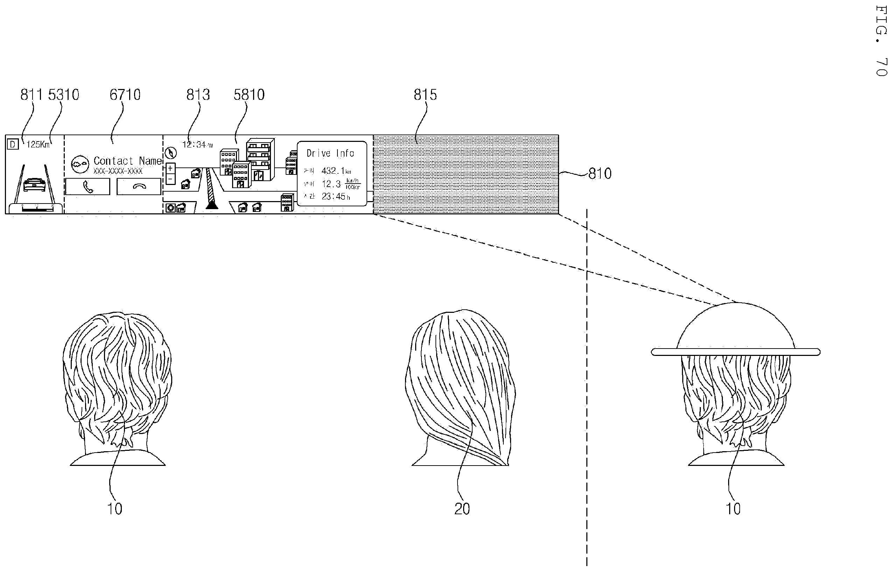

Referring to FIGS. 69 and 70, the vehicle display device 251 according to an embodiment of the present disclosure may use the viewing angle adjustment panel 1100 to block the image output through the display panel 810 from being exposed to the outside of the vehicle 100.

The controller 170 and/or the processor 370 may determine, through the object detection device 300, whether other vehicle OB11, the pedestrian OB12, the two-wheeled vehicle OB13, or the like approaches the right side of the vehicle 100 where the passenger seat is located. At this time, when it is determined that other vehicle OB11, the pedestrian OB12, two-wheeled vehicle OB13, or the like approaches the right side of the vehicle 100, the vehicle display device 251 may adjust the viewing angle through the viewing angle adjustment panel 1100 corresponding to the third area 815. The vehicle display device 251 may apply voltage to the third upper substrate 1235 and the third lower substrate 1236 disposed in one area of the viewing angle adjustment panel 1100 corresponding to the third area 815. At this time, as the arrangement of the liquid crystal of the third liquid crystal layer 1213 corresponding to the third area 815 is changed, the light emitted toward the right outside of the vehicle 100 may be restricted.

Accordingly, the pedestrian 30 located outside the vehicle 100 may not be able to watch the movie-related content 5410 output through the third area 815. Meanwhile, the driver 10 and the passenger 20 located inside the vehicle 100 may be able to watch all of the instrument panel screen 5310, the call function-related content 6710, the navigation screen 5810, and the movie-related content 5410.

In this disclosure, the screen output through the third area 815 is explained as an example, but is not limited thereto. The controller 170 and/or the processor 370 may determine, through the object detection device 300, whether the other vehicle OB11, the pedestrian OB12, two-wheeled vehicle OB13, or the like approaches the left side of the vehicle 100 where the driver's seat is located. At this time, when it is determined that the other vehicle OB11, the pedestrian OB12, two-wheeled vehicle OB13, etc. approaches the left side of the vehicle 100, the vehicle display device 251 may adjust the viewing angle through the viewing angle adjustment panel 1100 corresponding to the first area 811. The vehicle display device 251 may apply a voltage to the second upper substrate 1233 and the second lower substrate 1234 disposed in one area of the viewing angle adjustment panel 1100 corresponding to the first area 811. At this time, as the arrangement of the liquid crystal of the second liquid crystal layer 1212 corresponding to the first area 811 is changed, the light emitted toward the left outside of the vehicle 100 may be restricted.

As described above, according to at least one embodiment of the present disclosure, the viewing angle for the display panel 810 may be adjusted.

In addition, according to at least one embodiment of the present disclosure, the display area where the viewing angle is adjusted may be adjusted in various ways.

In addition, according to at least one embodiment of the present disclosure, when the viewing angle of the display panel is adjusted, the luminance of the image output through the area where the viewing angle is adjusted may be compensated.

In addition, according to at least one embodiment of the present disclosure, it is possible to prevent the privacy of a specific person inside the vehicle 100 from being exposed to others inside the vehicle 100.

In addition, according to at least one embodiment of the present disclosure, it is possible to prevent content output through the display panel 810 from being exposed to the outside of the vehicle 100.

The attached drawings are only for easy understanding of the embodiments disclosed in this specification, and the technical concept disclosed in this specification is not limited by the attached drawings, and it should be understood to include all changes, equivalents, or substitutes included in the idea and technical scope of this disclosure.

Meanwhile, the operating method of the vehicle display device of the present disclosure can be implemented as a processor-readable code on a recording medium readable by a processor.

The processor-readable recording medium includes all kinds of recording apparatuses in which data that can be read by the processor is stored.

Examples of the recording medium readable by the processor include a ROM, a RAM, a CD-ROM, a magnetic tape, a floppy disk, an optical data storage device, and the like, and may also be implemented in the form of a carrier wave such as transmission over the Internet. In addition, the processor-readable recording medium may be distributed over network-connected computer systems so that code readable by the processor in a distributed fashion can be stored and executed.

In addition, although the present disclosure has been described with reference to specific embodiments shown in the drawings, it is apparent to those skilled in the art that the present description is not limited to those exemplary embodiments and is embodied in many forms without departing from the scope of the present disclosure, which is described in the following claims. These modifications should not be individually understood from the technical spirit or scope of the present disclosure.

## Claims

1. A vehicle display device comprising:
a display panel;
a backlight unit comprising a plurality of blocks comprised of a light source;
a viewing angle adjustment panel comprising a plurality of liquid crystal layers comprised of liquid crystal; and
a controller,
wherein the controller changes an arrangement of the liquid crystal disposed in a restricted area of the viewing angle adjustment panel corresponding to a certain area of the display panel, based on a setting of a certain mode for controlling a viewing angle, and
adjusts an intensity of light emitted from a block corresponding to the restricted area among the plurality of blocks, based on a difference between a preset reference luminance level and a luminance level of the certain area according to the setting of the certain mode.

2. The vehicle display device of claim 1, wherein the intensity of the light emitted from the block corresponding to the restricted area corresponds to a voltage applied to the block corresponding to the restricted area, and as the difference between the preset reference luminance level and the luminance level of the certain area increases, the voltage applied to the block corresponding to the restricted area increases.

3. The vehicle display device of claim 1, wherein the reference luminance level is a luminance level of the certain area according to a cancel of the certain mode.

4. The vehicle display device of claim 1, wherein the reference luminance level is a luminance level of one area adjacent to the certain area among remaining area of the display panel excluding the certain area.

5. The vehicle display device of claim 1, wherein the controller adjusts an intensity of light emitted from the plurality of blocks in response to a change in ambient illuminance of vehicle,
wherein the reference luminance level increases in proportion to an increase in the ambient illuminance.

6. The vehicle display device of claim 1, wherein, in a state where the certain mode is set, the controller minimize the intensity of the light emitted from the block corresponding to the restricted area, based on a user not being located in a passenger seat.

7. The vehicle display device of claim 1, wherein, in a state where the certain mode is set, the controller determines the difference between the reference luminance level and the luminance level of the certain area according to a position of a user riding in a passenger seat.

8. The vehicle display device of claim 1, wherein the viewing angle adjustment panel comprises a plurality of substrates respectively disposed in both sides of the liquid crystal layer,
the arrangement of the liquid crystal is changed in a certain direction that restricts emission of light toward driver's seat, based on a voltage being applied to the plurality of substrates, and
as a distance between the restricted area of the viewing angle adjustment panel and the driver's seat decreases, a voltage applied to the restricted area of the viewing angle adjustment panel increases.

9. The vehicle display device of claim 1, wherein the viewing angle adjustment panel is comprised of a plurality of subunits disposed side by side so that the arrangement of the liquid crystal is independently controlled,
wherein the plurality of subunits respectively correspond to a plurality of areas forming the display panel.

10. The vehicle display device of claim 9, wherein, based on a fact that a speed of vehicle is a preset speed limit or higher,
the controller determines one area of the display panel adjacent to a passenger seat as the certain area, and
an area of the certain area increases as the speed of vehicle increases.

11. The vehicle display device of claim 9, wherein, based on an output of certain content related to driving of vehicle,
the controller determines the certain area from among remaining area of the display panel excluding an area from which the certain content is output.

12. The vehicle display device of claim 9, wherein, based on an output of certain content corresponding to a passenger seat,
the controller determines an area of the display panel from which the certain content is output as the certain area.

13. The vehicle display device of claim 1, wherein the controller sets the certain mode, based on whether a state of transmission of the vehicle corresponds to drive, reverse, or neutral, and
cancels the certain mode, based on the state of transmission of the vehicle corresponding to parking.

14. The vehicle display device of claim 1, wherein the controller sets the certain mode, based on the vehicle being set to manual mode, and
cancels the certain mode, based on the vehicle being set to autonomous driving mode.

15. The vehicle display device of claim 1, wherein the viewing angle adjustment panel comprises:
a plurality of first substrates respectively disposed in both sides of a first liquid crystal layer; and
a plurality of second substrates respectively disposed in both sides of a second liquid crystal layer,
wherein a liquid crystal included in the first liquid crystal layer changes its arrangement in a first direction that restricts emission of light toward driver's seat, based on a voltage being applied to the plurality of first substrates, and
wherein a liquid crystal included in the second liquid crystal layer changes its arrangement in a second direction that restricts emission of light toward passenger seat, based on a voltage being applied to the plurality of second substrates.
